# EUROPEAN PATENT APPLICATION

(11) **EP 4 451 385 A1**
(43) Date of publication of application: **23.10.2024**
(21) Application number: 22947445.7
(22) Date of filing: 24.06.2022
(51) Int. Cl.: H01M 4/505, H01M 4/62, H01M 10/0525

(54) **POSITIVE ELECTRODE MATERIAL COMPOSITION AND PREPARATION METHOD THEREFOR, POSITIVE ELECTRODE PLATE COMPRISING SAME, SECONDARY BATTERY, AND ELECTRIC DEVICE**

(71) Applicant: Contemporary Amperex Technology (Hong Kong) Limited, Central, Central And Western District (HK)
(72) Inventor: MA, Qingyan, Ningde, Fujian 352100 (CN); GUAN, Yingjie, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/101327
(87) International publication number: WO 2023/245679

(57) **Abstract**

The present application provides a positive electrode material composition, a method for the preparation thereof and a positive electrode plate, a secondary battery and an electrical device containing the same. The positive electrode material composition comprises a positive electrode active material with a core-shell structure and an organopolysiloxane compound, wherein the positive electrode active material comprises a core and a shell covering the core, wherein the core has a chemical formula of Li₁₊ₓMn_{1-y}A_{y}P_{1-z}R_{z}O₄, and the shell comprises a first cladding layer covering the core, a second cladding layer covering the first cladding layer, and a third cladding layer covering the second cladding layer. The positive electrode material composition of the present application enables the secondary battery to have a relatively high energy density, while further improving cycling performance safety performance and/or rate performance of the secondary battery.

## Description

### TECHNICAL FIELD

The present application belongs to the technical field of battery, in particular to a positive electrode material composition, a method for the preparation thereof and a positive electrode plate, a secondary battery and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources, however, lithium manganese phosphate is prone to leach out manganese ion during charging, resulting in rapid capacity decay.

### SUMMARY

An object of the present application is to provide a positive electrode material composition, a method for the preparation thereof, and a positive electrode plate, a secondary battery and an electrical device comprising the same. The positive electrode material composition enables the secondary battery to have a relatively high energy density, while further improving cycling performance, safety performance and rate performance of the secondary battery.

A first aspect of the present application provides a positive electrode material composition comprising a positive electrode active material with a core-shell structure and an organopolysiloxane compound, wherein the positive electrode active material comprises a core and a shell covering the core, the core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral; the shell comprises a first cladding layer covering the core, a second cladding layer covering the first cladding layer and a third cladding layer covering the second cladding layer, the first cladding layer comprising crystalline pyrophosphates LiₐMP₂O₇ and/or M_{b} (P₂O₇) _{c}, 0 ≤ a ≤ 2, 1 ≤ b ≤ 4, 1 ≤ c ≤ 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LiₐMP₂O₇, and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon.

The inventors have found, after extensive research, that by modifying lithium manganese phosphate and multilayer coating of lithium manganese phosphate, a new type of positive electrode active material with a core-shell structure can be obtained, and the positive electrode active material can realize a significantly reduced manganese ion dissolution and a reduced lattice change rate, and its use in secondary batteries can improve the cycling performance, rate performance, and safety performances of the batteries as well as increase the capacity performance of the batteries. When the positive electrode active material of the present application is used in combination with the organopolysiloxane compound, the erosion of the electrolyte on the surface of the positive electrode active material can be alleviated, the dissolution of manganese ions can be reduced, and the electrochemical performance of the positive electrode active material can be improved. Accordingly, the positive electrode plate and the electric device such as a secondary battery using the positive electrode material composition of the present application can have a high energy density and improved cycling performance, safety performance, and/or rate performance.

In some embodiments of the present application, the organopolysiloxane compound comprises at least one structural unit shown in Formula 1,

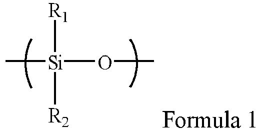

R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups. Optionally, R₁ and R₂ each independently represent H or at least one of the group consisting of the following functional groups: -COOH, -OH, -SH, amino groups, phosphate groups, polyether chain segments, Ci-Cs alkyl groups, Ci-Cs haloalkyl groups, Ci-Cs heteroalkyl groups, Ci-Cs haloheteroalkyl groups, C₂-C₈ alkenyl groups, C₂-C₈ haloalkenyl groups, and phenyl. More optionally, R₁ and R₂ each independently represent H or at least one of the group consisting of the following functional groups: -OH, -SH, amino groups, phosphate groups, polyether chain segments, C₁-C₈ alkyl groups, Ci-Cs haloalkyl groups, Ci-Cs heteroalkyl groups, Ci-Cs haloheteroalkyl groups, C₂-C₈ alkenyl groups, and C₂-C₈ haloalkenyl groups. As a result, the leaching out of manganese can be further reduced, which significantly improves the cycling performance and storage performance of secondary batteries.

In some embodiments of the present application, the organopolysiloxane compound comprises one or more selected from of a linear polysiloxane, and a cyclic polysiloxane, optionally, the organopolysiloxane compound is selected from a linear polysiloxane.

As a result, the erosion of the surface of the positive electrode active material caused by acidic substances in the electrolyte can be further alleviated, and the leaching out of Mn and Mn-site doping elements can be reduced, so as to significantly improve the cycling performance and storage performance of the battery. Due to the delocalization of electrons in the ring of the cyclic polysiloxane, the Si-O skeleton of the cyclic polysiloxane has a lower affinity for electron-rich F-containing ions than that of the linear polysiloxane, and thus the removal efficiency of F-containing ions in the electrolyte is slightly lower, the effect of reducing the leaching out of Mn and Mn-site doping elements is slightly weak, and the effect of improving the cycling performance of the battery is slightly poor.

In some embodiments of the present application, the linear polysiloxane further comprises a capping group. Optionally, the capping group comprises at least one of the group consisting of the following functional groups: polyethers, Ci-Cs alkyl groups, Ci-Cs haloalkyl groups, Ci-Cs heteroalkyl groups, C₁-C₈ haloheteroalkyl groups, C₂-C₈ alkenyl groups, C₂-C₈ haloalkenyl groups, C₆-C₂₀ aromatic hydrocarbon groups, C₁-C₈ alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

In some embodiments of the present application, the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, pendant aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane. Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, side chain phosphate-grafted polydimethylsiloxane.

In some embodiments of the present application, the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1, 3, 5, 7-octamethyl cyclotetrasiloxane, 1, 3, 5, 7-tetrahydro-1, 3, 5, 7-tetramethyl cyclotetrasiloxane, decamethylcyclopentasiloxane, 2, 4, 6, 8-tetramethyl cyclotetrasiloxane, 2, 4, 6, 8-tetramethyl-2, 4, 6, 8-tetravinyl cyclotetrasiloxane, hexadecamethylcyclooctasiloxane, and tetradecamethylcycloheptasiloxane.

In some embodiments of the present application, the organopolysiloxane compound has a number average molecular weight of 300, 000 or less, optionally of 400 to 80, 000. As a result, the battery may have good kinetic performance and high-temperature stability at the same time.

In some embodiments of the present application, a polar functional group is present in a mass percentage *α* in the organopolysiloxane compound, 0≤α< 50%, optionally, 5%≤a≤30%. As a result, the cycling performance and/or storage performance of the battery can be better improved.

In some embodiments of the present application, the organopolysiloxane compound is present in an amount of 0.01 wt% to 2 wt%, optionally 0.1 wt% to 2 wt%, based on the total weight of the positive electrode material composition. As a result, the cycling performance and/or storage performance of the battery can be better improved.

In some embodiments of the present application, the first cladding layer has a coating amount of greater than 0 and less than or equal to 6 wt%, optionally greater than 0 and less than or equal to 5.5 wt%, more optionally greater than 0 and less than or equal to 2 wt%, based on the weight of the core.

In some embodiments of the present application, the second cladding layer has a coating amount of greater than 0 and less than or equal to 6 wt%, optionally greater than 0 and less than or equal to 5.5 wt%, and more optionally between 2 wt% and 4 wt%, based on the weight of the core.

In some embodiments of the present application, the third cladding layer has a coating amount of greater than 0 and less than or equal to 6 wt%, optionally greater than 0 and less than or equal to 5.5 wt%, more optionally greater than 0 and less than or equal to 2 wt%, based on the weight of the core.

In the positive electrode active material having a core-shell structure of the present application, the coating amount of the three cladding layers is preferably within the above range, whereby it is possible to sufficiently cover the core, and at the same time further improve the cycling performance, the safety performance, and/or the rate performance of the secondary battery without sacrificing the gram capacity of the positive electrode active material.

In some embodiments of the present application, the first cladding layer has a thickness of from 1 nm to 10 nm, which is able to avoid the adverse effect on the kinetic performance of the positive electrode active material that may arise when the first cladding layer is too thick, and is able to avoid the problem of the first cladding layer not being able to effectively hinder the migration of the transition metal ions when the first cladding layer is too thin.

In some embodiments of the present application, the second cladding layer has a thickness of from 2 nm to 15 nm. Thus the surface structure of the second cladding layer is stable, and the side reaction with the electrolyte is small, so that the interface side reaction can be effectively reduced, thereby improving the high-temperature cycling performance and high-temperature storage performance of the secondary battery.

In some embodiments of the present application, the third cladding layer has a thickness of from 2 nm to 25 nm, which is capable of improving the electrical conductivity of the positive electrode active material and improving the compaction density of the positive electrode plate prepared using the positive electrode active material.

In some embodiments of the present application, the crystalline pyrophosphate in the first cladding layer has an interplanar spacing ranging from 0.293 nm to 0.470 nm, and a crystal orientation (111) angle ranging from 18.00° to 32.00°.

In some embodiments of the present application, the crystalline phosphate in the second cladding layer has an interplanar spacing ranging from 0.244 nm to 0.425 nm, and a crystal orientation (111) angle ranging from 20.00° to 37.00°.

Crystalline pyrophosphates and crystalline phosphates having interplanar spacing and angle within the above ranges can more effectively inhibit the rate of lattice change of lithium manganese phosphate and leaching of manganese ion during the process of de-intercalation and intercalation of lithium, and thereby enhance the high-temperature cycling performance and the high-temperature storage performance of the secondary battery.

In some embodiments of the present application, in the core the ratio of y to 1-y is from 1:10 to 1:1, optionally from 1:4 to 1:1. Thereby, the cycling performance and the rate performance of the secondary battery are further improved.

In some embodiments of the present application, in the core the ratio of z to 1-z is from 1:9 to 1:999, optionally from 1:499 to 1:249. Thereby, the cycling performance and the rate performance of the secondary battery are further improved.

In some embodiments of the present application, the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0. The present application improves the comprehensive performance of the secondary battery by limiting the molar ratio of the SP2 carbon to the SP3 carbon to the above range.

In some embodiments of the present application, manganese is present a content of from 10 wt% to 35 wt%, optionally in the range of 15 wt% to 30 wt%, and more optionally in the range of 17 wt% to 20 wt%, based on the weight of the positive electrode active material. Thus, it is possible to effectively avoid problems such as poor structural stability of the positive electrode active material and density decline that may be caused if the manganese's content is too large, so as to improve the performance of the secondary battery in terms of cycling, storage, and compaction density, etc. In addition, it is also possible to avoid problems such as low voltage plateau that may be caused if the manganese's content is too small, so as to improve the energy density of the secondary battery.

In some embodiments of the present application, phosphorus is present in a content of from 12 wt% to 25 wt%, optionally in the range of 15 wt% to 20 wt%, based on the weight of the positive electrode active material. Thus, the following can be effectively avoided: if the content of the elemental phosphorus is too high, it may cause the covalence of P-O to be too strong and affect the conductivity of the small polarizers, thereby affecting the electrical conductivity of the positive electrode active material; if the content of the elemental phosphorus is too small, it may make the lattice structure of the pyrophosphate in the core, in the first cladding layer, and/or in the second cladding layer less stable, thereby affecting the positive electrode active material's overall stability.

In some embodiments of the present application, the weight ratio of manganese to phosphorus is in the range of 0.90 to 1.25, optionally in the range of 0.95 to 1.20, based on the weight of the positive electrode active material. Thus, the following can be effectively avoided: if the weight ratio is too large, it may lead to an increase in the leaching out of manganese ions, which affects the stability of the positive electrode active material, the cycling performance and the storage performance of the secondary battery; if the weight ratio is too small, it may cause a decrease in the discharge voltage plateau, which results in a decrease in the energy density of the secondary battery.

In some embodiments of the present application, before and after complete intercalation/deintercalation of lithium the positive electrode active material has a lattice change rate of 4% or less, optionally 3.8% or less, more optionally from 2.0% to 3.8%. Thus, the positive electrode active material can improve the capacity exertion and rate performance of the secondary battery.

In some embodiments of the present application, the positive electrode active material has a Li/Mn anti-site defect concentration of 4% or less, optionally 2.2% or less, more optionally from 1.5% to 2.2%. By having the Li/Mn anti-site defect concentration within the above range, it is possible to avoid Mn²⁺ from hindering Li⁺ transmission, and at the same time enhance the capacity exertion and rate performance of the positive electrode active material.

In some embodiments of the present application, the positive electrode active material has a compaction density of 2.2 g/cm³ or more, optionally 2.2 g/cm³ or more and 2.8 g/cm³ or less, at 3T. Thus, it is beneficial to improving the volumetric energy density of the secondary battery.

In some embodiments of the present application, the positive electrode active material has a surface oxygen valence of -1.82 or less, optionally -1.89 to -1.98. Thereby, by limiting the surface oxygen valence of the positive electrode active material to the above range as described above, it is possible to alleviate the interfacial side reaction of the positive electrode active material and the electrolyte, thereby improving the cycling performance and storage performance and the like of the secondary battery.

In some embodiments of the present application, the positive electrode active material further comprises a conductive agent and a binder. Optionally, the binder is present in a content of 1.79 wt% to 10 wt%, based on the total weight of the positive electrode material composition. Optionally, the conductive agent is present in a content of 0.2 wt% to 10 wt%, based on the total weight of the positive electrode material composition.

In some embodiments of the present application, the positive electrode material composition has a powder resistivity of 4 Ω/cm to 55 Ω/cm, optionally from 4 Ω/cm to 40 Ω/cm at 12MPa. Thus, the secondary battery can have better kinetic properties.

A second aspect of the present application provides a method for preparing a positive electrode material composition, comprising the following steps:
step of providing a core material: the core has the chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral;
step of coating: providing LiₐMP₂O₇ and/or M_{b} (P₂O₇) _{c} and XPO₄ suspensions, respectively, adding the core material to the suspensions and mixing them, and obtaining the positive electrode active material by sintering, wherein the positive electrode active material has a core-shell structure comprising the core and a shell covering the core, wherein the shell comprises a first cladding layer covering the core, a second cladding layer covering the first cladding layer and a third cladding layer covering the second cladding layer, the first cladding layer comprising crystalline pyrophosphates LiₐMP₂O₇ and/or M_{b} (P₂O₇) _{c}, 0 ≤ a < 2, 1 ≤ b ≤ 4, 1 ≤ c ≤ 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LLMP₂O₇ and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon;
step of mixing: mixing homogeneously the resulting positive electrode active material with a organopolysiloxane compound, an optional binder and an optional conductive agent to obtain the positive electrode material composition.

In some embodiments of the present application, the step of providing a core material comprises:
Step (1), mixing a manganese source, a dopant of element A and an acid in a solvent and stirring to obtain manganese salt particles doped with element A;
Step (2) : mixing the manganese salt particles doped with element A with a lithium source, a phosphorus source and a dopant of element R in a solvent to obtain a slurry, and obtaining a core doped with element A and element R after sintering under the protection of an inert gas atmosphere, wherein the core doped with element A and element R is Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

In some embodiments of the present application, the mixing in step (1) is carried out at a temperature in a range of 20°C to 120°C, optionally in a range of 40°C to 120°C.

In some embodiments of the present application, the stirring in step (1) is carried out by at a rate of 400 rpm to 800 rpm for 1h to 9 h, optionally from 3 h to 7h.

When the heating temperature and stirring time during the preparation of the core particles are within the above range, the resulting core and the positive electrode active material made therefrom have fewer lattice defects, which is favorable to inhibiting manganese ion's leaching and reducing the interfacial side reaction between the positive electrode active material and the electrolyte, thereby improving the cycling performance and safety performance of the secondary battery.

In some embodiments of the present application, the mixing in step (2) is carried out at a temperature of 20°C to 120°C, optionally 40°C to 120°C for 1 hour to 10 hours.

In some embodiments of the present application, the dopant of element A is one or more of monomers, carbonates, sulfates, chlorates, nitrates, organic acids, oxides, hydroxides of one or more of the elements selected from Zn, Al, Na, K, Mg, Mo, W, Ti, V, Zr, Fe, Ni, Co, Ga, Sn, Sb, Nb and Ge.

In some embodiments of the present application, the dopant of element R is one or more of an inorganic acid, an organic acid, a sulfate, a chloride, a nitrate, an organic acid salt, an oxide, a hydroxide of one or more of the elements of one or more of the elements of B, Si, N and S.

In some embodiments of the present application, the coating step comprises:
a first coating step: dissolving a source of element M, a source of phosphorus and an acid, and optionally a source of lithium, in a solvent to obtain suspension of first cladding layer; mixing the core obtained in the step of providing a core material with the suspension of first cladding layer obtained in the first coating step sufficiently, drying, and sintering to obtain the first cladding layer-covered material;
a second coating step: dissolving a source of element X, a phosphorus source, and an acid in a solvent to obtain a suspension of second cladding layer; mixing the first cladding layer-covered material obtained in the first coating step with the suspension second cladding layer obtained in the second coating step sufficiently, drying, and sintering, to obtain a two cladding layers-covered material;
a third coating step: dissolving a carbon source in a solvent and fully dissolving it to obtain a solution of third cladding layer; then adding the two cladding layers-covered material obtained in the second coating step to the solution of third cladding layer, mixing well, drying and then sintering to obtain a three cladding layers-covered material, i.e., a positive electrode active material.

In some embodiments of the present application, in the first coating step the pH of a solution with a source of elemental M, a source of phosphorus, and an acid dissolved, and optionally a lithium source, is controlled to be from 3.5 to 6.5, and then stirred and reacted for from 1 h to 5 h, and then the solution is warmed to 50°C to 120°C and maintained at that temperature for from 2 h to 10 h.

In some embodiments of the present application, the sintering in the first coating step is carried out at 650°C to 800°C for 2 h to 6 h.

By controlling the conditions of the first coating step within the above range, it is possible to ensure or even improve the capacity exertion, the cycling performance, the high-temperature storage performance, the rate performance and the like of a secondary battery prepared by using the positive electrode active material.

In some embodiments of the present application, in the second coating step a source of element X, a source of phosphorus and an acid are dissolved in a solvent and then stirred and reacted for 1 h to 10 h, and then the resulting solution is warmed to 60°C to 150°C and maintained at that temperature for 2 h to 10 h.

In some embodiments of the present application, the sintering in the second coating step is carried out at 500°C to 700°C for 6 h to 10 h.

In the step of providing the core material and in the first coating step and the second coating step, prior to sintering, i.e., in the preparation of the core material in which the chemical reaction occurs (steps (1) and (2) ) as well as in the preparation of the first coating suspension and the second coating suspension, by means of the reaction temperatures and the reaction times selected as described above, it is possible to avoid the following situations: when the reaction temperature is too low then the reaction cannot occur or the reaction rate is slow; when the temperature is too high, the product decomposes or a heterogeneous phase is formed; when the reaction time is too long, the product particle size is large, which may increase the time and difficulty of the subsequent process; and when the reaction time is too short, the reaction is incomplete and less product is obtained.

In some embodiments of the present application, the sintering in the third coating step is carried out at 700°C to 800°C for 6 h to 10 h.

By controlling the conditions of the third coating step within the above range, the capacity exertion and compaction density of the positive electrode active material can be improved.

The method for preparing the positive electrode active material according to the present application has a wide source of raw materials, low cost, and a simple process, which is conducive to industrialization.

A third aspect of the present application provides a positive electrode plate comprising a positive electrode current collector and a positive electrode film layer provided on at least one surface of the positive electrode current collector, wherein the positive electrode film layer comprises the positive electrode material composition of the first aspect of the present application or the positive electrode material composition prepared by the method of the second aspect of the present application, and the positive electrode material composition is present in the positive electrode film layer in a content of 50 wt% or more, based on total weight of the positive electrode film layer.

In some embodiments of the present application, the positive electrode material composition is present in the positive electrode film layer in a content of 90 wt% to 100 wt%, based on total weight of the positive electrode film layer.

In some embodiments of the present application, a solid-liquid contact angle between the positive electrode film layer and a non-aqueous organic solvent is between 3° and 90°, optionally between 3° and 60°, and more optionally between 10° and 30°. The contact angle in a suitable range enables the battery to have a relatively high energy density, while further improving cycling performance, safety performance and/or rate performance.

In some embodiments of the present application, the positive electrode film layer has a porosity of 15% to 50%, and optionally 15% to 30%. The porosity in a suitable range enables the battery to have a relatively high energy density, while further improving cycling performance, safety performance and/or rate performance.

In some embodiments of the present application, the positive electrode film layer has a resistance of greater than 0 and less than or equal to 6 Ω. Thus, the secondary battery can have better kinetic performance.

In some embodiments of the present application, a bonding force between the positive electrode film layer and the positive electrode current collector is greater than or equal to 0.5 MPa, thereby facilitating the capacity performance of the secondary battery.

In some embodiments of the present application, the positive electrode film layer has a surface density of 0.006 g/cm² to 0.065 g/cm², thereby facilitating the enhancement of the volumetric energy density of the secondary battery.

In some embodiments of the present application, (6) the positive electrode film layer has a absorption rate to the electrolyte of 0.0125 µg/s to 100 µg/s, optionally 0.5 µg/s to 40 µg/s, thereby facilitating the improvement of electrochemical performance of the secondary battery.

The positive electrode plate of the present application, when used in a secondary battery, is capable of improving the energy density, cycling performance, safety performance, and/or rate performance of the secondary battery.

A fourth aspect of the present application provides a secondary battery comprising the positive electrode material composition of the first aspect of the present application, or the positive electrode material composition prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application include the positive electrode material composition of the present application, and thus have at least the same advantages as the positive electrode material composition.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of a secondary battery according to an embodiment of the present application.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.

In the drawings, the accompanying drawings are not necessarily drawn to actual scale. The reference numerals are defined as follows:
1 battery pack
2 upper case body
3 lower case body
4 battery module
5 battery
51 housing
52 electrode assembly
53 cover plate.

### DETAILED DESCRIPTION

Hereinafter, embodiments of the positive electrode material composition, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range (s) " disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent) ; A is false (or absent) and B is true (or present) ; or both A and B are true (or present) .

As used herein, substituents of compounds are disclosed as groups or ranges. It is explicitly expected that such a description includes each individual subcombination of members of these groups and ranges. For example, the term "C1-C8 alkyl group" is explicitly expected to disclose C1, C2, C3, C4, C5, C6, C7, C8, C1-C8, C1-C7, C1-C6, C1-C5, C1-C4, C1-C3, C1-C2, C2-C8, C2-C7, C2-C6, C2-C5, C2-C4, C1-C3, C1-C2, C2-C8, C2-C7, C2-C6, C2-C5, C2-C4, C2-C4, C2-C4, C2~. C3, C3-C8, C3-C7, C3-C6, C3-C5, C3-C4, C4-C8, C4-C7, C4-C6, C4-C5, C5-C8, C5-C7, C5-C6, C6-C8, C6-C7, C5-C6, C6-C8, C6-C7, and C7-C8 alkyl groups.

As used herein, the term "aliphatic hydrocarbon group" comprises alkyl, alkenyl, and alkynyl groups. The term "heteroaliphatic hydrocarbon group" means that the aliphatic hydrocarbon group containing heteroatoms (e.g., N, O, S, etc.) . The term "heteroalkyl group" means that the alkyl group containing heteroatoms (e.g., N, O, S, etc.), such as alkoxy group, alkylthiogroup, etc.

The inventors of the present application found in the actual operation that manganese ion leaching out is serious during the deep charging and discharging of the lithium manganese phosphate (LiMnPO₄) positive electrode active material. Although the prior art have attempted to coat lithium manganese phosphate with lithium iron phosphate to reduce interfacial side reactions, such coating cannot prevent the migration of the leached manganese ions into the electrolyte. The leached manganese ions are reduced to manganese metal after migration to the negative electrode. The produced metal manganese is equivalent to "catalyst", which can catalyze the decomposition of the SEI (solid electrolyte interphase) film on the surface of the negative electrode to produce a by-product. One part of the by-product is gas, which is prone to cause the battery to expand and affect the safety performance of the battery, and the other part is deposited on the surface of the negative electrode, and blocks the channel of lithium ion in and out of the negative electrode, resulting in increased impedance of the battery and affecting the kinetic performance of the battery. In addition, in order to supplement the decomposed SEI film, the electrolyte and the active lithium ions in the battery are continuously consumed, which also has an irreversible impact on the capacity retention rate of the battery.

The inventors have found, after extensive research, that by modifying lithium manganese phosphate and by covering the lithium manganese phosphate with multilayers, a new type of positive electrode active material with a core-shell structure can be obtained, and the positive electrode active material can realize a significantly reduced manganese ion dissolution and a reduced lattice change rate, and its use in secondary batteries can improve cycling performance, rate performance, and safety performances of the batteries as well as increase the capacity performance of the batteries. The use of the material in secondary batteries can improve cycling performance, rate performance, safety performance and capacity performance of the battery. Meanwhile, the inventors of the present application have found that the combination of the positive electrode active material and the organopolysiloxane compound can alleviate the erosion of the electrolyte on the surface of the positive electrode active material, and thus help to give full play to the electrochemical performance of the positive electrode active material.

### Positive electrode material composition

Specifically, a first aspect of the present application provides a positive electrode material composition comprising a positive electrode active material with a core-shell structure and an organopolysiloxane compound, wherein the positive electrode active material comprises a core and a shell covering the core, the core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral; the shell comprises a first cladding layer covering the core, a second cladding layer covering the first cladding layer and a third cladding layer covering the second cladding layer, the first cladding layer comprising crystalline pyrophosphates LiₐMP₂O₇, and/or M_{b} (P₂O₇) _{c}, 0 ≤ a ≤ 2, 1 ≤ b ≤ 4, 1 ≤ c ≤ 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LiₐMP₂O₇, and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers y1, y2......and yn of respective A1, A2 ......and An must fall within the numerical range defined by the present application for x, and the sum of y1, y2...... and xn must also fall within such numerical range of the present application. Similarly, in the case where R is more than two elements, the limitations on numerical ranges for the stoichiometric numbers of R in the present application also have the above meaning.

In an optional embodiment, when A is an element selected from one, two, three, or four of Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, with n1+n2+n3+n4=y and n1, n2, n3, and n4 being positive numbers and not simultaneously 0, and Q, D, E, and K are each independently one selected from Zn, Al, Na, K, Mg, Mo, W, Ti, V, Zr, Fe, Ni, Co, Ga, Sn, Sb, Nb, and Ge, and optionally at least one of Q, D, E, and K is Fe. Optionally, one of n1, n2, n3, and n4 is zero, and the rest are not zero; and more optionally, two of n1, n2, n3 and n4 are zero and the rest are not zero; more optionally, three of n1, n2, n3 and n4 are zero and the rest are not zero. In the core Li₁₊ₓMn_{1-y}A_{y}P_{1-z}R_{z}O₄, it is advantageous to dope one, two, three or four of the A elements at the manganese site, and optionally, to dope one, two or three of the A elements; furthermore, it is advantageous to dope one or two of the R elements at the phosphorus site, which facilitates a uniform distribution of dopant elements.

In the core Li₁₊ₓMn_{1-y}A_{y}P_{1-z}R_{z}O₄, the magnitude of x is affected by the magnitude of the valence states of A and R, and the magnitude of y and z, to ensure that the whole system exhibits electroneutrality. If the value of x is too small, it will lead to a lower lithium content of the whole core system, affecting the capacity exertion of the positive electrode active material. The value of y will limit the total amount of all the dopant elements, and if y is too small, i.e., the amount of doping is too small, the dopant elements cannot play a role, and if y is more than 0.5, it will lead to a lower content of Mn in the system, affecting the voltage plateau of the material. The R element is doped at the position of P. Since the P-O tetrahedron is more stable, and if the value of z is too large, the stability of the material will be affected, thus the value of z is limited to 0.001 to 0.100.

The positive electrode active material of the present application can improve the capacity exertion, cycling performance and safety performance of secondary batteries. Although the mechanism is not clear, it is presumed that the lithium manganese phosphate positive electrode active material of the present application has a core-shell structure, and by doping the manganese and phosphorus sites of the lithium manganese phosphate core with element A and element R, respectively, not only can it effectively reduce the leaching out of manganese ions, and thus reduce manganese ions migrating to the negative electrode, and reduce the electrolyte consumed by the decomposition of the SEI membrane, and improve the cycling performance and the safety performance of the secondary batteries, but also can promote the adjustment of Mn-O bond, lowering the migration barrier of lithium ion, promoting lithium ion's migration, and improving the rate performance of the secondary battery; by covering the core with a first cladding layer comprising crystalline pyrophosphate, the migration resistance of manganese ions can be further increased, reducing their leaching, and reducing the content of surface lithium impurity and the contact between the core and the electrolyte, thus reducing the interfacial side reaction, reducing the gas production, and improving the high-temperature storage performance, cycling performance and safety performance of the secondary battery; by further covering a crystalline phosphate cladding layer with excellent lithium ion conductivity, the interfacial side reaction between the positive electrode active material and the electrolyte can be effectively reduced, thereby improving the high-temperature cycling and storage performance of the secondary battery; and by further covering a carbon layer as a third cladding layer, the safety performance and kinetic performance of the secondary battery can be further improved.

In addition, in the core, the element A doped in the manganese position of the lithium manganese phosphate also helps to reduce the rate of lattice change of the e lithium manganese phosphate in the process of de-intercalation and intercalation of lithium in this material, improve the structural stability of the lithium manganese phosphate positive electrode active material, greatly reduce the leaching of the manganese ions and reduce the oxygen activity on the surface of the particles; and the element R doped in the phosphorus position also helps to change the degree of difficulty of the change in the bond length of the Mn-O bond, thereby improving the electronic conductivity and reducing the lithium ion migration barrier, promoting lithium ion migration, and improving the rate performance of the secondary battery.

In addition, the entire core system remains electrically neutral, which ensures that there are as few defects and heterogeneous phases in the positive electrode active material as possible. If there is an excessive amount of transition metal (e.g., manganese) in the positive electrode active material, due to the more stable structure of the material system itself, the excess transition metal is likely to precipitate in the form of monomers or form a heterogeneous phase inside the crystal lattice, and keeping the electroneutrality can keep such heterogeneous phases as small as possible. Additionally, ensuring the system is electrically neutral can also lead to the creation of lithium vacancies in the positive electrode active material in some cases, which can lead to better kinetic performance of the positive electrode active material.

The positive electrode material composition of the present application comprises a positive electrode active material and an organopolysiloxane compound. The inventors of the present application found that the combination of the positive electrode active material with the organopolysilane compound can alleviate the erosion of the surface of the positive electrode active material caused by the electrolyte, and reduce the leaching out of Mn, so as to improve the electrochemical performance of the positive electrode active material. The possible reason is that the Si-O skeleton of the organopolysiloxane compound can remove F ions from the electrolyte, thereby reducing the acidity of the electrolyte and alleviating the erosion of the surface of the positive electrode active material caused by acidic substances in the electrolyte. The organopolysiloxane compound also has a certain hydrophobicity, and can be used to prepare a positive electrode plate with positive electrode active material. A contact angle between the prepared positive electrode plate and the electrolyte is increased, so as to alleviate the erosion of the surface of the positive electrode active material caused by the electrolyte.

As a result, the electrical device such as the positive electrode plate and secondary battery using the positive electrode material composition of the present application can have high energy density, while further improving cycling performance, safety performance and/or rate performance.

The average particle size of the core prepared in the present application ranges from 50 nm to 500 nm, and the Dv50 is from 200 nm to 300 nm. The primary particle size of the core is within the range of 50 nm to 500 nm, and the Dv50 is from 200 nm to 300 nm. If the average particle size of the core is too large (more than 500 nm), the capacity exertion of the secondary batteries using the material will be affected; if the average particle size of the core is too small, it has a large specific surface area and is prone to agglomeration, making it difficult to achieve uniform coating.

Through process control (e.g., sufficient mixing and grinding of materials from various sources), it is possible to ensure that the elements are uniformly distributed in the crystal lattice without agglomeration. The positions of the main characteristic peaks in the X-ray diffraction (XRD) patterns of lithium manganese phosphate doped with element A and element R are consistent with those of the undoped LiMnPO₄, which indicates that the doping process has not introduced impurity phases, and thus the improvement of the performance of the core is mainly from the elemental doping rather than due to impurity phase. After preparing the positive electrode active material according to the present application, the inventors cut the middle region (the inner core region) of the prepared positive electrode active material particles by a focused ion beam (referred to as FIB), and tested it by a transmission electron microscope (referred to as TEM) as well as an X-ray energy spectrum analysis (referred to as EDS), and found that the distribution of the various elements was uniform, and that aggregation did not occur.

In the present application, "crystalline" means having a degree of crystallinity of 50% or more, i.e., 50% to 100%. A crystallinity of less than 50% is referred to as the glassy (or amorphous) state. The crystalline pyrophosphates and crystalline phosphates described in the present application have a crystallinity of 50% to 100%. Pyrophosphates and phosphates with a certain degree of crystallinity are not only conducive to giving full play to the functions of the pyrophosphate cladding layer in hindering the leaching out of manganese ions and the excellent lithium ion conductivity of the phosphate cladding layer, and reducing the interfacial side reactions, but also enable better lattice matching of the pyrophosphate cladding layer and the phosphate cladding layer so that a closer bonding of the cladding layers is achieved.

In the present application, the crystallinity of crystalline pyrophosphate as the material for the first cladding layer and crystalline phosphate as the material for the second cladding layer of the positive electrode active material can be tested by conventional technical means in the field, for example, by density method, infrared spectroscopy, differential scanning calorimetry, and nuclear magnetic resonance absorption method, and can also be tested, for example, by X-ray diffraction method.

A specific method for testing the crystallinity of crystalline pyrophosphate as the material for the first cladding layer and crystalline phosphate as the material for the second cladding layer of the positive electrode active material by the X-ray diffraction method may comprise the steps of taking a certain amount of the positive electrode active material powder and measuring the total scattering intensity by X-rays, which is the sum of the scattering intensities of the entire space substance, and is only related to the intensity of the primary rays, the chemical structure of the positive electrode active material powder, the total electron number (i.e., the mass), and not with the ordinal state of the sample; the crystalline scattering is then separated from the amorphous scattering from the diffractogram, and the degree of crystallinity, i.e., the ratio of the scattering of the crystalline portion of the scattering to the total intensity of the scattering.

It should be noted that in the present application, the crystallinity of the pyrophosphate and phosphate in the cladding layer can be adjusted, for example, by adjusting the process conditions of the sintering process such as the sintering temperature, the sintering time and the like.

In the present application, since metal ions are difficult to migrate in the pyrophosphate, the pyrophosphate as the first cladding layer can effectively isolate the dopant metal ions from the electrolyte. The crystalline pyrophosphate has a stable structure, so the coating with crystalline pyrophosphate can effectively inhibit the leaching out of the transition metal and improve the cycling performance.

The bonding between the first cladding layer and the core is similar to a heterojunction, and the firmness of the bonding is limited by the degree of lattice matching. When the lattice mismatch is below 5%, the lattice matching is better, and the two materials are easy to combine tightly. The tight bonding can ensure that the cladding layer will not fall off in the subsequent cycling process, which is conducive to ensuring the long-term stability of the positive electrode active material. The measurement of the degree of bonding between the first cladding layer and the core is mainly carried out by calculating the degree of mismatch between the core and the respective lattice constant of the coating. In the present application, after elements A and R are doped in the core, the matching degree between the core and the first cladding layer is improved and the core and the pyrophosphate cladding layer can be more tightly bonded with each other as compared to the non-doped elements.

Crystalline phosphate is chosen as the second cladding layer, firstly, because it has a higher lattice matching with the first cladding layer of crystalline pyrophosphate (the mismatch is only 3%) ; secondly, the stability of the phosphate itself is better than that of the pyrophosphate, and covering the pyrophosphate with it is conducive to the improvement of the stability of the positive electrode active material. The structure of crystalline phosphate is very stable, and it has excellent ability to conduct lithium ions, so the use of crystalline phosphate for covering can effectively reduce the interfacial side reaction between positive electrode active material and electrolyte, thus improving the high-temperature cycling performance and high-temperature storage performance of secondary battery. The lattice matching between the second cladding layer and the first cladding layer, among other things, is similar to the bonding between the first cladding layer and the nucleus as described above, and when the lattice mismatch is less than 5%, the lattice matching is better, and the two materials are easy to be bonded tightly.

The main reason for carbon as the third cladding layer is the better electronic conductivity of the carbon layer. Since electrochemical reactions occur when applied in secondary batteries, which require the participation of electrons. Carbon with excellent electrical conductivity can be used to cover the positive electrode active material in order to increase the electron transfer between particles and at different locations on the particles. Coating with carbon can effectively improve the electrical conductivity and desolventization of the positive electrode active material.

In some embodiments, the primary particles of the positive electrode active material have an average particle size in the range of 50 nm to 500 nm, with a median volume particle size Dv50 in the range of 200 nm to 300 nm. Since the particles will agglomerate, the actual measured size of the secondary particles after agglomeration may be from 500 nm to 40, 000 nm. The size of the particles of the positive electrode active material affects the processing of the material and the compaction density performance of the electrode plate. By selecting the average particle size of the primary particles to be within the above range, it is thereby possible to effectively avoid the following: the average particle size of the primary particles of the positive electrode active material being too small, which may cause agglomeration of the particles and make the particles difficult to be dispersed, and which requires a higher amount of binder, resulting in a poorer brittleness of the electrode plate; and the average particle size of the primary particles of the positive electrode active material being too large, which may result in larger inter-particle gaps and a lower compaction density.

By the above-described scheme, the lattice change rate of lithium manganese phosphate and manganese ion's leaching in the process of de-intercalation and intercalation of lithium can be effectively suppressed, thereby enhancing the high-temperature cycling performance and high-temperature storage performance of the secondary battery.

In some embodiments, the crystalline pyrophosphate in the first cladding layer has an interplanar spacing ranging from 0.293 nm to 0.470 nm, and the angle of the crystal direction (111) ranges from 18.00° to 32.00°; the crystalline phosphate in the second cladding layer has an interplanar spacing ranging from 0.244 nm to 0.425 nm, and the angle of the crystal direction (111) ranges from 20.00° to 37.00°.

Both the first cladding layer and the second cladding layer in the positive electrode active material described in the present application use crystalline substances. The crystalline pyrophosphates and crystalline phosphates in the cladding layer can be characterized by means of techniques that are conventional in the art or, for example, with the aid of transmission electron microscopy (TEM) . Under TEM, the core and the cladding layer can be distinguished by testing the interplanar spacing.

The specific test method for the interplanar spacing and angle of crystalline pyrophosphate and crystalline phosphate in the cladding layers may include the following steps: taking a certain amount of the sample powder of the coated positive electrode active material in a test tube and injecting a solvent, such as alcohol, into the test tube, and then carrying out sufficient stirring and dispersion, and then taking an appropriate amount of the above solution with a clean disposable plastic pipette and adding it dropwise to a 300-mesh copper mesh, and then leaving part of the powder on the copper mesh, and transferring the copper mesh with the sample to the TEM sample chamber for testing to obtain the original picture of the TEM test. The original picture obtained from the above TEM test was opened in the diffractometer software and Fourier transformed to obtain the diffraction pattern, and the distance from the diffracted spot to the center position in the diffraction pattern was measured to obtain the interplanar spacing, and the angle could be calculated according to Bragg's equation.

The difference between the range of the interplanar spacing of the crystalline pyrophosphate and that of the crystalline phosphate can be directly judged by the value of the interplanar spacing.

Crystalline pyrophosphates and crystalline phosphates having interplanar spacing and angle within the above range can more effectively inhibit the lattice change rate of lithium manganese phosphate and the leaching out of manganese ions in the process of de-intercalation and intercalation of lithium, thereby enhancing the high-temperature cycling performance and high-temperature storage performance of the secondary battery.

In the core, x is any value in the range of -0.100 to 0.100, for example, x may be 0.001, 0, - 0.001, -0.002, -0.003, -0.004, and 005. Optionally, x is any value in the range of -0.005 to 0.002.

Inthecore, y is any value in the range of 0.001 to 0.500, for example, y maybe0.001, 0.100, 0.200, 0.300, 0.350, 0.400, 0.450, and 0.500.

Inthecore, z is any value in the range of 0.001 to 0.100, for example, z maybe0.001, 0.002, 0.003, 0.004, 0.005, and 0.100.

In some embodiments, in the core, the ratio of y to (1-y) is from 1:10 to 1:1, optionally from 1:4 to 1:1. Herein y denotes the sum of the stoichiometric numbers of the Mn-site doping element A. The energy density and cycling performance of a secondary battery using the positive electrode active material may be further improved when the above conditions are met.

In some embodiments, in the core, the ratio of z to (1-z) is from 1:9 to 1:999, optionally from 1:499 to 1:249. Herein z denotes the sum of the stoichiometric numbers of the P-position doping element R. The energy density and cycling performance of a secondary battery using the positive electrode active material may be further improved when the above conditions are met.

In some embodiments, the carbon of the third cladding layer is a mixture of SP2 carbon and SP3 carbon; optionally, the molar ratio of the SP2 carbon to the SP3 carbon is any value in the range of 0.1 to 10, optionally any value in the range of 2.0 to 3.0.

In some embodiments, the molar ratio of the SP2 carbon to the SP3 carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or any value within any of the foregoing ranges.

By selecting the morphology of the carbon in the carbon cladding layer, the overall electrochemical performance of the secondary battery is thereby enhanced. Specifically, by using a mixed morphology of SP2 carbon and SP3 carbon and limiting the ratio of the SP2 carbon to the SP3 carbon to a certain range, the following can be effectively avoided: if the carbon in the cladding layer is all in the amorphous SP3 morphology, the electrical conductivity is poor, and if it is all in the graphitized SP2 morphology, although the electrical conductivity is good, there are few lithium-ion pathways, which is not conducive to the de-intercalation of lithium-ion. In addition, limiting the molar ratio of the SP2 carbon to the SP3 carbon to the above range achieves good electrical conductivity and ensures the lithium ion pathway, and is therefore conducive to improving the kinetic performance and cycling performance of the secondary battery.

The mixing ratio of the SP2 form and the SP3 form of the carbon for the third cladding layer can be controlled by sintering conditions such as sintering temperature and sintering time. For example, in the case where sucrose is used as a carbon source to prepare the third cladding layer, the sucrose is cracked at a high temperature and then deposited on the second cladding layer while at the same time under the action of high temperature, a carbon cladding layer with both the SP3 form and the SP2 form is produced. The ratio of the SP2 carbon to the SP3 carbon may be regulated by selecting the high temperature cracking conditions and the sintering conditions.

The structure and characterization of the carbon for the third cladding layer can be determined by Raman (Raman) spectroscopy as follows: the molar ratio of the SP2 carbon to the SP3 carbon is confirmed by splitting the energy spectrum of the Raman test to obtain I_{d}/I_{g} (I_{d} is the intensity of the peak of the carbon in the SP3 form and I_{g} is the intensity of the peak of the carbon in the SP2 form) .

In some embodiments, the first cladding layer has a coating amount of greater than 0 and less than or equal to 6 wt%, optionally greater than 0 and less than or equal to 5.5 wt%, more optionally greater than 0 and less than or equal to 2 wt%, based on the weight of the core.

In some embodiments, the second cladding layer has a coating amount of greater than 0 and less than or equal to 6 wt%, optionally greater than 0 and less than or equal to 5.5 wt%, and more optionally between 2 wt% and 4 wt%, based on the weight of the core.

In some embodiments, the third cladding layer has a coating amount of greater than 0 and less than or equal to 6 wt%, optionally greater than 0 and less than or equal to 5.5 wt%, more optionally greater than 0 and less than or equal to 2 wt%, based on the weight of the core.

In the present application, each layer has a non-zero amount of covering.

In the positive electrode active material with a core-shell structure described in the present application, the coating amount of the three cladding layers is preferably within the above range, whereby the core can be sufficiently coated and at the same time further improve the cycling performance, safety performance, and/or rate performance of the secondary battery without sacrificing the gram capacity of the positive electrode active material.

For the first cladding layer, by controlling the coating amount within the above range, the following situations can be effectively avoided: if the coating amount is too small, the thickness of the cladding layer is relatively thin, which may not be able to effectively impede the migration of the transition metal; if the coating amount that is too large, the cladding layer is too thick, which may affect the migration of Li⁺, and thus affect the rate performance of the positive electrode active material.

For the second cladding layer, by controlling the coating amount within the above range, the following situations can be effectively avoided: if the coating amount is too much, the overall platform voltage of the positive electrode active material may be affected; if the coating amount is too little, it may not be able to realize a sufficient coating effect.

For the third cladding layer, the carbon covering mainly serves to enhance the electron transfer between the particles, however, since the structure also contains a large amount of amorphous carbon, the density of the carbon is relatively low, and therefore, if the coating amount is too large, the compaction density of the electrode plate may be affected.

In some embodiments, the first cladding layer has a thickness of 1 nm to 10 nm.

In some embodiments, the second cladding layer has a thickness of 2 nm to 15 nm.

In some embodiments, the third cladding layer has a thickness of 2 nm to 25 nm.

In some embodiments, the thickness of the first cladding layer may be about 2 nm, about 3 nm, about 4 nm, about 5 nm, about 6 nm, about 7 nm, about 8 nm, about 9 nm, or about 10 nm, or in any range of any of the above values.

In some embodiments, the thickness of the second cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or in any range of any of the above values.

In some embodiments, the thickness of the third cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of the above values.

When the thickness of the first cladding layer is within the range of 1 nm to 10 nm, it is possible to avoid an unfavorable effect on the kinetic performance of the positive electrode active material that may arise when it is too thick, and it is possible to avoid a problem that may not be able to efficiently hinder the migration of the transition metal ions when it is too thin.

When the thickness of the second cladding layer is within the range of 2 nm to 15 nm, the surface structure of the second cladding layer is stable, and the side reaction with the electrolyte is small, and thus the interfacial side reaction can be effectively mitigated, thereby improving the high-temperature cycling performance and high-temperature storage performance of the secondary battery.

When the thickness of the third cladding layer is within the range of 2 nm to 25 nm, the electrical conductivity of the positive electrode active material can be improved and the compaction density of the positive electrode plate prepared using the positive electrode active material can be improved.

The test for the thickness of the cladding layer is mainly carried out by FIB, and the specific method may comprise the following steps: randomly selecting a single particle from the positive electrode active material powder to be tested, cutting a thin slice with a thickness of about 100 nm from the middle position of the selected particle or from the vicinity of the middle position, and then carrying out a TEM test on the thin slice, measuring the thickness of the cladding layer, measuring 3-5 positions, and taking the average value.

In some embodiments, the content of manganese is in the range of 10 wt% to 35 wt%, optionally in the range of 15 wt% to 30 wt%, and more optionally in the range of 17 wt% to 20 wt%, based on the weight of the positive electrode active material.

In some embodiments, the content of phosphorus is in the range of 12 wt% to 25 wt%, optionally in the range of 15 wt% to 20 wt%, based on the weight of the positive electrode active material.

In some embodiments, the weight ratio of manganese to phosphorus is in the range of 0.90 to 1.25, optionally in the range of 0.95 to 1.20.

In the present application, where only the core of the positive electrode active material contains manganese, the amount of manganese may correspond to the amount of the core.

In the present application, limiting the content of manganese to the above range can effectively avoid problems such as deterioration of the structural stability of the positive electrode active material and decrease in density that may be caused if the content of manganese is too large, so as to improve the performance of the secondary battery in terms of cycling, storage and compaction density; and it can avoid problems such as a low voltage plateau that may be caused if the content of manganese is too small, so as to improve the energy density of the secondary battery.

In the present application, limiting the content of phosphorus to the above range can effectively avoid the following situations: if the content of phosphorus is too large, it may lead to the covalence of P-O being too strong and affect the conductivity of the small polarizers, thus affecting the electrical conductivity of the positive electrode active material; if the content of phosphorus is too small, it may cause the lattice structure of the pyrophosphate in the core, in the first cladding layer and/or of the phosphate in the second cladding layer to be less stable, thereby affecting the overall stability of the positive electrode active material.

The weight ratio of the manganese content to the phosphorus content has the following effects on the performance of the secondary battery: if the weight ratio is too large, it means that there is too much manganese, the manganese ions' leaching increases, which affects the stability and capacity exertion of the positive electrode active material, and thus affects the cycling performance and the storage performance of the secondary battery; if the weight ratio is too small, it means that there is too much phosphorus, which is prone to form a heterogeneous phase, causing the discharge voltage plateau of the positive electrode active material to decrease, thus the energy density of the secondary battery is reduced.

The measurement of the elemental manganese and the elemental phosphorus may be carried out by technical means conventional in the art. In particular, the content of the manganese element and the phosphorus element is measured using the following method: the material is dissolved in dilute hydrochloric acid (concentration 10-30%), the content of each element of the solution is tested using ICP, and then the content of the manganese element is measured and converted to obtain its weight percentage.

In some embodiments, the positive electrode active material with a core-shell structure has a lattice change rate of less than 4%, optionally less than 3.8%, and more optionally from 2.0% to 3.8% before and after complete deintercalation and intercalation of lithium.

The de-intercalation and intercalation of lithium in manganese phosphate (LiMnPO₄) is a two-phase reaction. The interfacial stress of the two phases is determined by the magnitude of the lattice change rate before and after the deintercalation and intercalation of lithium, and the smaller the lattice change rate is, the smaller the interfacial stress is, and the easier the Li⁺ transport is. Therefore, reducing the lattice change rate of the core will be favorable to enhance the Li⁺ transport ability, thereby improving the multiplicity performance of the secondary battery. The positive electrode active material having a core-shell structure described in the present application is capable of realizing a lattice change rate before and after the deintercalation and intercalation of lithium of less than 4%, and thus the use of the positive electrode active material is capable of improving the multiplication rate performance of the secondary battery. The lattice change rate can be measured by methods known in the art, such as X-ray diffraction (XRD) mapping.

In some embodiments, the positive electrode active material with a core-shell structure has a Li/Mn anti-site defect concentration of 4% or less, optionally 2.2% or less, more optionally 1.5% to 2.2%. The term Li/Mn anti-site defect refers to interchange of Li⁺ with Mn²⁺ in terms of its site in the LiMnPO₄ lattice. Accordingly, the Li/Mn anti-site defect concentration refers to a percentage of Li⁺ interchanged with Mn²⁺ in the positive electrode active material relative to the total amount of Li⁺. The Li/Mn anti-site defect concentration in the present application may, for example, be tested according to JIS K 0131-1996.

The positive electrode active material with a core-shell structure described in the present application is capable of realizing the lower Li/Mn anti-site defect concentration described above. Although the mechanism is not yet well understood, the inventors of the present application speculate that since Li⁺ and Mn²⁺ will swap positions in the LiMnPO₄ lattice, and the Li⁺ transport channel is a one-dimensional channel, Mn²⁺ will be difficult to migrate in the Li⁺ channel, which in turn hinders the Li⁺ transport. As a result, the positive electrode active material with a core-shell structure described in the present application is able to avoid Mn²⁺ from hindering Li⁺ transmission and at the same time enhance the capacity exertion and rate performance of the positive electrode active material due to the low concentration of Li/Mn anti-site defects, which is within the above range.

In some embodiments, the positive electrode active material has a compaction density of 2.2 g/cm³ or more, optionally 2.2 g/cm³ or more and 2.8 g/cm³ or less, at 3T (tonne) . The higher the compaction density is, the greater the weight of the positive electrode active material per unit volume is. Thus, increase of the compaction density is conducive to improving volumetric energy density of batteries. Compaction density can be measured according to GB/T 24533-2009.

In some embodiments, the positive electrode active material with a core-shell structure has a surface oxygen valence of -1.90 or less, optionally -1.90 to -1.98. The stable valence of oxygen is originally -2, and the closer the valence state is to the -2, the stronger the ability to gain electrons, i.e., the stronger the oxidizability, and usually, the surface valence is below -1.7. By limiting the surface oxygen valence of the positive electrode active material to the above range as described above, the present application is able to mitigate the interfacial side reaction between the positive electrode active material and the electrolyte, thereby improving the cycling performance and the storage performance of the secondary battery and the like. The surface oxygen valence state can be measured by methods known in the art, such as by electron energy loss spectroscopy (EELS) .

In some embodiments, the organopolysiloxane compound comprises at least one structural unit shown in Formula 1,

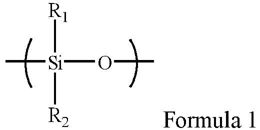

R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups. Optionally, R₁ and R₂ each independently represent H or at least one of the group consisting of the following functional groups: -COOH, -OH, -SH, amino groups, phosphate groups, polyether chain segments, Ci-Cs alkyl groups, Ci-Cs haloalkyl groups, Ci-Cs heteroalkyl groups, Ci-Cs haloheteroalkyl groups, C₂-C₈ alkenyl groups, C₂-C₈ haloalkenyl groups, and phenyl. More optionally, R₁ and R₂ each independently represent H or at least one of the group consisting of the following functional groups: -OH, -SH, amino groups, phosphate groups, polyether chain segments, C₁-C₈ alkyl groups, Ci-Cs haloalkyl groups, C₁-C₈ heteroalkyl groups, Ci-Cs haloheteroalkyl groups, C₂-C₈ alkenyl groups, and C₂-C₈ haloalkenyl groups.

These functional groups can complex manganese ions and/or react with acidic substances in the electrolyte, thereby the leaching out of Mn and Mn-site doping elements, and further improving the cycling performance and storage performance of the secondary battery.

When these functional groups are also electron-withdrawing, the Si in the Si-O skeleton of the organopolysiloxane compound is more electron-deficient, thereby further enhancing the affinity with F-containing ions in the electrolyte, alleviating the erosion of the surface of the positive electrode active material caused by acidic substances in the electrolyte and reducing the leaching out of Mn and Mn-site doping elements, so as to significantly improve the cycling performance and storage performance of the secondary battery.

In some embodiments, the organopolysiloxane compound comprises one or more selected from of a linear polysiloxane, and a cyclic polysiloxane, optionally, the organopolysiloxane compound is selected from a linear polysiloxane.

As a result, the erosion of the surface of the positive electrode active material caused by acidic substances in the electrolyte can be further alleviated, and the leaching out of Mn and Mn-site doping elements can be reduced, so as to significantly improve the cycling performance and storage performance of the secondary battery. Due to the delocalization of electrons in the ring of the cyclic polysiloxane, the Si-O skeleton of the cyclic polysiloxane has a lower affinity for electron-rich F-containing ions than that of the linear polysiloxane, and thus the removal efficiency of F-containing ions in the electrolyte is slightly lower, the effect of reducing the leaching out of Mn and Mn-site doping elements is slightly weak, and the effect of improving the cycling performance of the battery is slightly poor.

In some embodiments, the linear polysiloxane further comprises a capping group. Optionally, the capping group comprises at least one of the group consisting of the following functional groups: polyethers, Ci-Cs alkyl groups, Ci-Cs haloalkyl groups, Ci-Cs heteroalkyl groups, Ci-Cs haloheteroalkyl groups, C₂-C₈ alkenyl groups, C₂-C₈ haloalkenyl groups, C₆-C₂₀ aromatic hydrocarbon groups, Ci-Cs alkoxy groups, C₂-C₈ epoxy groups, hydroxyl groups, Ci-Cs hydroxyalkyl groups, amino groups, C₁-C₈ aminoalkyl groups, carboxyl groups, and C₁-C₈ carboxyl alkyl groups.

In some embodiments, the cyclic polysiloxane has a molecular formula shown in Formula 2, wherein m represents the degree of polymerization of the structural unit shown in Formula 1. Optionally, *m*≤12, *m*≤11*, m*≤10*, m*≤9 or *m*≤8.

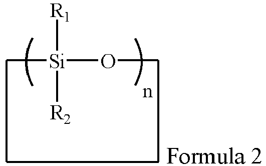

As an example, the linear polysiloxane includes, but is not limited to, one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, pendant aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane.

Optionally, the linear polysiloxane comprises one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, pendant phosphate-grafted polydimethylsiloxane.

As an example, the linear polysiloxane includes, but is not limited to, one or more of cyclic polydimethylsiloxane, cyclic polymethyl vinyl siloxane, cyclic polymethyl hydrosiloxane, and cyclic polymethyl trifluoropropyl siloxane. Optionally, the cyclic polysiloxane comprises one or more of 1, 3, 5, 7-octamethyl cyclotetrasiloxane, 1, 3, 5, 7-tetrahydro-1, 3, 5, 7-tetramethyl cyclotetrasiloxane, decamethylcyclopentasiloxane, 2, 4, 6, 8-tetramethyl cyclotetrasiloxane, 2, 4, 6, 8-tetramethyl-2, 4, 6, 8-tetravinyl cyclotetrasiloxane, hexadecamethylcyclooctasiloxane, and tetradecamethylcycloheptasiloxane.

In some embodiments, the organopolysiloxane compound has a number average molecular weight of 300, 000 or less, such as of 400 to 300000, 400 to 200000, 400 to 100000, 400 to 80000, 400 to 50000, 400 to 20000, 400 to 10000, 1000 to 100000, 1000 to 50000, 1000 to 20000 or 1000 to 10000. The number average molecular weight of the organopolysiloxane compound may be determined by methods known in the art, such as by gel permeation chromatography (GPC) . A PL-GPC 220 high temperature gel permeation chromatograph may be used for testing. In the present application, the organopolysiloxane compound may be either an oligomer or a polymer.

When the number average molecular weight of the organopolysiloxane compound is within the suitable ranges, it is possible to combine good kinetic properties and high-temperature stability of the battery. In addition, the following conditions may be effectively avoided: if the number average molecular weight of the organopolysiloxane compound is too small, it may result in poor hydrophobicity, which may not effectively increase the contact angle between the positive film layer and the electrolyte, and then may not effectively alleviate the erosion of on the surface of the positive electrode active material caused by the electrolyte, resulting in a significant improvement of the cycling performance and/or high-temperature stability of the battery; and if the number average molecular weight of the organopolysiloxane compound is too high, it may result in strong hydrophobicity, which may be not conducive to the dispersion of the slurry, thus affecting the improvement effect on the performance of the battery.

In some embodiments, a polar functional group is present in a mass percentage *α* in the organopolysiloxane compound, 0≤*α* < 50%, optionally, 5%≤*α*≤30%.

In the present application, the mass percentage of the polar functional groups in the organopolysiloxane compound means the mass percentage of the polar functional groups in R₁, R₂ and the capping groups in the organopolysiloxane compound. In the present application, the polar functional groups include one or more of -COOH, -OH, -SH, -CN, -SCN, amino groups (including -NH₂, and - NH-), phosphate groups, carboxylate groups (-COO-), amide groups (-CONH-), aldehyde groups (-CHO), sulfonyl groups (-S (=O) ₂-), polyether chain segments, halogen atoms, alkoxy groups, and epoxy groups. When the polar functional group mentioned above are directly connected with silicon atoms, *α* represents a mass fraction of these polar functional groups in the organopolysiloxane compound. When the polar functional group mentioned above is not directly connected with silicon atoms, *α* represents the sum of the mass fractions of the polar functional groups and divalent to tetravalent methyl groups (e.g., -CH₂, -CH-, -C-, etc.) directly connected with the polar functional groups in the organopolysiloxane compound. As used herein, the divalent to tetravalent methyl groups represent carbon atoms that are directly connected with the polar functional groups and are located between the polar functional groups and the silicon atoms, and other non-polar functional groups connected with the carbon atoms. In the case of polymethyl trifluoropropyl siloxane, *α* refers to the mass percentage of -CF₃, excluding the ethylidene groups. In the case of polymethyl chloropropyl siloxane, *α* refers to the mass percentage of -CH₂Cl, excluding the ethylidene groups. In the case of hydroxypropyl terminated polydimethylsiloxane, *α* refers to the mass percentage of -CH₂OH. The mass percentage of the polar functional group in the organopolysiloxane compound may be determined by methods known in the art, such as by titration (e.g. acid-base titration, redox titration, and precipitation titration), infrared spectroscopy, and nuclear magnetic resonance spectroscopy.

When the mass percentage of the polar functional group in the organopolysiloxane compound is within the suitable ranges, it has a better effect on reducing the acidity of the electrolyte and removing F ions in the electrolyte, thereby better alleviating the erosion of the surface of the positive electrode active material caused by acidic substances in the electrolyte, and better improving the cycling performance and/or high-temperature stability of the battery. In addition, the following conditions may be effectively avoided: if the content of the polar functional groups in the organopolysiloxane compound is too high, the effect on reducing the acidity of the electrolyte and removing F ions in the electrolyte may not be further improved, but a smaller contact angle between the positive electrode film layer and the electrolyte may be obtained, thereby resulting in a significant improvement of the cycling performance of the secondary battery.

In some embodiments, the organopolysiloxane compound is present in an amount of 0.01 wt% to 2 wt%, optionally 0.1 wt% to 2 wt%, based on the total weight of the positive electrode material composition.

When the amount of the organopolysiloxane compound is within the suitable ranges, it has a better effect on reducing the acidity of the electrolyte and removing F ions in the electrolyte, thereby better alleviating the erosion of the surface of the positive electrode active material caused by acidic substances in the electrolyte, and better improving the cycling performance and storage performance of the secondary battery. In addition, the following conditions may be effectively avoided: if the amount of the organopolysiloxane compound is too high, the electrolyte infiltration of the positive electrode film layer and the kinetic performance of the secondary battery may be affected, and at the same time, the energy density of the battery may be reduced since the organopolysiloxane compound does not provide a capacity; if the amount of the organopolysiloxane compound is too low, the effect on reducing the acidity of the electrolyte and removing F ions in the electrolyte is not significant, and the erosion of the surface of the positive electrode active material caused by acidic substances in the electrolyte cannot be effectively alleviated, thereby resulting in a significant improvement of the cycling performance and/or high-temperature storage performance of the secondary battery.

In some embodiments, the positive electrode material composition further comprises a binder. The binder may be a substance known in the art to have a bonding effect. Optionally, the binder comprises at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

Optionally, the binder is present in a content of 1.79 wt% to 10 wt%, and optionally 2 wt% to 5 wt%, based on the total weight of the positive electrode material composition.

In some embodiments, the positive electrode material composition further comprises a conductive agent. The conductive agent may be a substance known in the art to have an electron conduction effect. Optionally, the positive conductive agent comprises at least one of superconducting carbon, conductive graphite, acetylene black, carbon black, Ketjen black, carbon dots, carbon nanotubes, graphene, and carbon nanofibers.

Optionally, the conductive agent is present in a content of 0.2 wt% to 10 wt%, and optionally 0.5 wt% to 5 wt%, based on the total weight of the positive electrode material composition.

In some embodiments, the positive electrode material composition has a powder resistivity of 4 Ω/cm to 50 Ω/cm, optionally from 4 Ω/cm to 40 Ω/cm at 12MPa. The powder resistivity of the positive electrode material composition in a suitable range enables the battery to have a better kinetic performance. The powder resistivity of the positive electrode material composition may be determined by a method known in the art. For example, according to GB/T 30835-2014, the powder resistivity tester can be used for testing. An exemplary test method includes steps of weighing a certain amount of powder of a sample to be tested in a special mold, setting different pressure, and obtaining the powder resistivity at different pressures. In the present application, the pressure can be set to 12 Mpa. The testing instrument can be Suzhou lattice ST2722-SZ type four probe powder resistivity tester.

In some embodiments, the positive electrode material composition has a specific surface area of 8 m²/g to 20 m²/g, optionally 8 m²/g to 15 m²/g. The specific surface area of the positive electrode material composition in a suitable range can reduce interfacial side reactions between the positive electrode plate using the composition and the electrolyte, and reduce the volume expansion of the battery, thereby enabling the battery to have a better electrochemical performance. The specific surface area of the positive electrode material composition can be determined by a method known in the art. For example, according to GB/T 19587-2017, the nitrogen adsorption specific surface area analysis test method can be used for testing, and the BET (BrunauerEmmett Teller) method can be used for calculating. Nitrogen adsorption specific surface area analysis test can be carried out by Micromeritics Tri-Star 3020 specific surface area aperture analysis tester.

### Preparation method

A second aspect of the present application provides a method for preparing the positive electrode material composition according to the first aspect.

Specifically, the method comprises a step of providing a core material, a step of coating and a step of mixing, wherein:
step of providing a core material: the core has the chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral;
step of coating: providing LiₐMP₂O₇ and/or M_{b} (P₂O₇) _{c} and XPO₄ suspensions, respectively, adding the core material to the suspensions and mixing them, and obtaining the positive electrode active material by sintering, wherein the positive electrode active material has a core-shell structure comprising the core and a shell covering the core, wherein the shell comprises a first cladding layer covering the core, a second cladding layer covering the first cladding layer and a third cladding layer covering the second cladding layer, the first cladding layer comprising crystalline pyrophosphates LiₐMP₂O₇ and/or M_{b} (P₂O₇) _{c}, 0 ≤ a < 2, 1 ≤ b ≤ 4, 1 ≤ c ≤ 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LiₐMP₂O₇ and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon;
step of mixing: mixing homogeneously the resulting positive electrode active material with a organopolysiloxane compound, an optional binder and an optional conductive agent to obtain the positive electrode material composition.

In some embodiments, the step of providing a core material comprises the following Step (1) and Step (2):
Step (1), mixing a manganese source, a dopant of element A and an acid in a solvent and stirring to obtain manganese salt particles doped with element A;
Step (2) : mixing the manganese salt particles doped with element A with a lithium source, a phosphorus source and a dopant of element R in a solvent to obtain a slurry, and obtaining a core doped with element A and element R after sintering under the protection of an inert gas atmosphere, wherein the core doped with element A and element R is Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

The preparation methods of the present application are not particularly limited to the source of the material, the source of an element may include one or more of a monomer, sulfate, halide, nitrate, organic acid salt, oxide, or hydroxide of the element, and the precursor being the source may fulfill the purpose of the preparation methods of the present application.

In some embodiments, the dopant of element A is one or more of monomers, carbonates, sulfates, chlorates, nitrates, organic acids, oxides, hydroxides of one or more of the respective elements selected from Zn, Al, Na, K, Mg, Mo, W, Ti, V, Zr, Fe, Ni, Co, Ga, Sn, Sb, Nb and Ge.

In some embodiments, the dopant of element R is one or more of an inorganic acid, an organic acid, a sulfate, a chloride, a nitrate, an organic acid salt, an oxide, a hydroxide of one or more of the elements of one or more of the respective elements of B, Si, N and S.

In the present application, the manganese source may be a manganese-containing substance known in the art that can be used to prepare lithium manganese phosphate. As an example, the manganese source may be one or more selected from elemental manganese, manganese dioxide, manganese phosphate, manganese oxalate, and manganese carbonate.

In the present application, the acid may be one or more selected from inorganic acids hydrochloric acid, sulfuric acid, nitric acid, phosphoric acid, silicic acid, silica acid, and organic acids such as oxalic acid. In some embodiments, the acid is a dilute organic acid with a concentration of 60 wt% or less.

In some embodiments, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

In some embodiments, after that the manganese source, the dopant of element A and the acid are reacted in a solvent to obtain a suspension of manganese salt doped with element A, the suspension is filtered, dried, and sanded to obtain manganese salt particles doped with element A having a particle size of 50-200 nm.

In some embodiments, the slurry in step (2) is dried to obtain a powder, and then the powder is sintered to obtain a core doped with element A and element R.

In some embodiments, the step (1) is mixed at a temperature of 20°C to 120°C, optionally 40°C to 120°C.

In some embodiments, the mixing in the step (1) is carried out at 400 rpm to 700 rpm for 1 h to 9 h, optionally 3 h to 7 h.

Optionally, the reaction temperature in the step (1) may be about 30°C, about 50°C, about 60°C, about 70°C, about 80°C, about 90°C, about 100°C, about 110°C, or about 120°C; the stirring in the step (1) is carried out for about 2 hours, about 3 hours, about 4 hours, about 5 hours, about 6 hours, about 7 hours, about 8 hours, or about 9 hours; optionally, the reaction temperature and the stirring time in step (1) may be within any range of any of the above values.

In some embodiments, the step (2) is mixed at a temperature of 20°C to 120°C, optionally 40°C to 120°C for 1 hour to 12 hours. Optionally, the reaction temperature in the step (2) may be about 30°C, about 50°C, about 60°C, about 70°C, about 80°C, about 90°C, about 100°C, about 110°C, or about 120°C; the mixing in the step (2) is carried out for about 2 hours, about 3 hours, about 4 hours, about 5 hours, about 6 hours, about 7 hours, about 8 hours, about 9 hours, about 10 hours, about 11 hours, or about 12 hours; optionally, the reaction temperature and the mixing time in the step (2) may be within any range of any of the above values.

When the temperature and time during the preparation of the core particles are within the above range, the core obtained by preparation and the positive electrode active material made therefrom have fewer lattice defects, which is favorable to suppressing manganese ion's leaching and reducing the interfacial side reaction between the positive electrode active material and the electrolyte, thereby improving the cycling performance and safety performance of the secondary battery.

In some embodiments, optionally, in the process of preparing the lithium manganese phosphate particles doped with element A and element R, pH of the solution is controlled to be from 3.5 to 6, optionally, the pH of the solution is controlled to be from 4 to 6, and more optionally, the pH of the solution is controlled to be from 4 to 5. It is to be noted that the pH of the resultant mixture can be adjusted in the present application by a method commonly used in the art, for example, by adding an acid or a base.

Optionally, in some embodiments, in the step (2), the molar ratio of the manganese salt particles doped with element A to the lithium source and the phosphorus source is 1: (0.5-2.1) : (0.5-2.1), and more optionally, the molar ratio of the manganese salt particles doped with element A to the lithium source and to the phosphorus source is about 1:1:1.

In some embodiments, optionally, the sintering conditions in the process of preparing A-element and R-element doped lithium manganese phosphate are as follows: sintering at an atmosphere of inert gas or a mixture of inert gas and hydrogen at a temperature of from 600°C to 950°C for 4 hours to 10 hours; optionally, the sintering may be at a temperature of from about 650°C, to about 700°C, to about 750°C, to about 800°C, to about 850°C, or to about 900°C for about 2 hours, about 3 hours, about 4 hours, about 5 hours, about 6 hours, about 7 hours, about 8 hours, about 9 hours, or about 10 hours; optionally, the sintering may be at temperatures for sintering times, within any range of any of the above values. In the process of preparing A-element and R-element doped lithium manganese phosphate, when the sintering temperature is too low and the sintering time is too short, it will lead to a lower crystallinity of the core of the positive electrode active material, which will affect the overall performance, while when the sintering temperature is too high, the heterogeneous phases are likely to appear in the core of the positive electrode active material, which will affect the overall performance; and when the sintering time is too long, the particles of the core of the positive electrode active material will be larger in length, thus affecting the capacity exertion, compaction density, rate performance, and the like.

In some embodiments, optionally, the protective atmosphere is a mixture of 70-90 vol% nitrogen and 10-30 vol% hydrogen.

In some embodiments, the coating step comprises a first coating step, a second coating step and a third coating step:
a first coating step: dissolving a source of element M, a source of phosphorus and an acid, and optionally a source of lithium, in a solvent to obtain suspension of first cladding layer; mixing the core obtained in the step of providing a core material with the suspension of first cladding layer obtained in the first coating step sufficiently, drying, and sintering to obtain the first cladding layer-covered material;
a second coating step: dissolving a source of element X, a phosphorus source, and an acid in a solvent to obtain a suspension of second cladding layer; mixing the first cladding layer-covered material obtained in the first coating step with the suspension second cladding layer obtained in the second coating step sufficiently, drying, and sintering, to obtain a two cladding layers-covered material;
a third coating step: dissolving a carbon source in a solvent and fully dissolving it to obtain a solution of third cladding layer; then adding the two cladding layers-covered material obtained in the second coating step to the solution of third cladding layer, mixing well, drying and then sintering to obtain a three cladding layers-covered material, i.e., a positive electrode active material.

In some embodiments, the source of element M is one or more of monomers, carbonates, sulfates, chlorates, nitrates, organic acids, oxides, hydroxides of one or more of the respective elements selected from Fe, Ni, Mg, Co, Cu, Zn, Ti, Ag, Zr, Nb, and Al.

In some embodiments, the source of element X is one or more of monomers, carbonates, sulfates, chlorates, nitrates, organic acids, oxides, hydroxides of one or more of the respective elements Li, Fe, Ni, Mg, Co, Cu, Zn, Ti, Ag, Zr, Nb, and Al.

The amount of the sources of each of the elements A, R, M, and X added depends on the target doping amount, and the ratio of the amount of lithium source, manganese source, and phosphorus source conforms to the stoichiometric ratio.

As an example, the carbon source is one or more of starch, sucrose, glucose, polyvinyl alcohol, polyethylene glycol, and citric acid.

In some embodiments, in the first coating step, the pH of the solution of the source dissolved with element M, the phosphorus source and acid, and optionally the lithium source, is controlled to be from 3.5 to 6.5, and then stirred and reacted for from 1 hour to 5 hours, and then the solution is warmed up to from 50°C to 120°C, and maintained at that temperature for from 2 hours to 10 hours. In some embodiments, sintering is carried out at 650°C to 800°C for 2 hours to 6 hours in the first coating step.

Optionally, in the first coating step, the reaction is fully carried out. Optionally, in the first coating step, the reaction proceeds for about 1.5 hours, about 2 hours, about 3 hours, about 4 hours, about 4.5 hours, or about 5 hours. Optionally, the reaction time of the reaction in the first coating step may be within any range of any of the above values.

Optionally, in the first coating step, the solution pH is controlled to be from 4 to 6. Optionally, in the first coating step, the solution is warmed to about 55°C, about 60°C, about 70°C, about 80°C, about 90°C, about 100°C, about 110°C, or about 120°C and held at that temperature for about 2 hours, about 3 hours, about 4 hours, about 5 hours, about 6 hours, about 7 hours, about 8 hours , about 9 hours, or about 10 hours; optionally, the temperature at which the warming occurs and the holding time in the first coating step may be within any range of any of the above values.

Optionally, in the first coating step, the sintering may be carried out at about 650°C, about 700° C., about 750° C., or about 800° C. for about 2 hours, about 3 hours, about 4 hours, about 5 hours, or about 6 hours; optionally, the sintering temperature and the sintering time, may be within any range of any of the above values.

In the first coating step, by controlling the sintering temperature and time within the above range, the following can be effectively avoided: when the sintering temperature in the first coating step is too low and the sintering time is too short, it will result in the first cladding layer having a low degree of crystallinity and more amorphous matter, which will lead to a decrease in the effect of inhibiting the dissolution of metals, thereby affecting the cycling performance and the storage performance of the secondary battery; whereas, if the sintering temperature is too high, this will lead to the appearance of heterogeneous phases in the first cladding layer, which will also affect its effect of inhibiting metal dissolution, thereby affecting the cycling performance and storage performance of the secondary battery, etc.; and if the sintering time is too long, this will increase the thickness of the first cladding layer, affecting the migration of Li⁺, thereby affecting the capacity exertion of the positive electrode active material and the rate performance, etc.

In some embodiments, in the second coating step, the source of element X, the phosphorus source and the acid are dissolved in a solvent, then stirred and reacted for 1 hour to 10 hours, and then the solution is warmed up to 60°C to 150° C. and maintained at that temperature for 2 hours to 10 hours. In some embodiments, the sintering in the second coating step is carried out at 500°C to 700°C for 6 hours to 10 hours.

Optionally, in the second coating step, the reaction is fully carried out. Optionally, in the second coating step, the reaction proceeds for about 1.5 hours, about 2 hours, about 3 hours, about 4 hours, about 4.5 hours, about 5 hours, about 6 hours, about 7 hours, about 8 hours, about 9 hours, or about 10 hours. Optionally, the reaction time in the second coating step may be within any range of any of the above values.

Optionally, in the second coating step, the solution is warmed to about 65°C, about 70°C, about 80°C, about 90°C, about 100°C, about 110°C, about 120°C, about 130°C, about 140°C, or about 150°C and maintained at that temperature for about 2 hours, about 3 hours, about 4 hours, about 5 hours, about 6 hours, about 7 hours, about 8 hours, about 9 hours, or about 10 hours; optionally, the temperature at which the warming occurs and the holding time in the second coating step may be within any range of any of the above values.

In the step of providing the core material and in the first coating step and the second coating step, prior to sintering, i.e., in the preparation of the core material in which the chemical reaction takes place (steps (1) and (2) ) as well as in the preparation of the first cladding layer suspension and the second cladding layer suspension, it is possible to efficiently avoid the following by selecting the appropriate reaction temperatures and the reaction times, as described above: if the reaction temperature is too low, the reaction cannot occur or the reaction rate is slow; if the temperature is too high, the product decomposes or a heterogeneous phase is formed; if the reaction time is too long, the product particle size is large, which may increase the time and difficulty of the subsequent process; and if the reaction time is too short, then the reaction is incomplete and less product is obtained.

Optionally, in the second coating step, the sintering may be carried out at about 550°C, about 600°C, or about 700°C for about 6 hours, about 7 hours, about 8 hours, about 9 hours, or about 10 hours; optionally, the sintering temperature and the sintering time may be in any range of any of the above values.

In the second capping step, by controlling the sintering temperature and time within the above range, the following can be effectively avoided: if the sintering temperature in the second coating step is too low and the sintering time is too short, it will result in the second cladding layer having a low degree of crystallinity, more amorphous states, and a decline in its performance of lowering the surface reactive activity of the positive electrode active material, thereby affecting the cycling performance and storage performance of the secondary battery, etc.; and if the sintering temperature is too high, it will lead to the appearance of heterogeneous phases in the second cladding layer, which will also affect its effect of lowering the surface reaction activity of the positive electrode active material, thereby affecting the cycling performance and the storage performance of the secondary battery, etc.; and if the sintering time is too long, it will lead to an increase in the thickness of the second cladding layer, which will affect the voltage plateau of the positive electrode active material, thereby causing the energy density of the secondary battery to decrease, etc.

In some embodiments, the sintering in the third coating step is carried out at 700° C. to 800° C. for 6 hours to 10 hours. Optionally, in the third coating step, the sintering may be performed at about 700°C, about 750°C, or about 800°C for about 6 hours, about 7 hours, about 8 hours, about 9 hours, or about 10 hours; optionally, the temperature of the sintering, and the time of the sintering, may be within any range of any of the above values.

In the third coating step, by controlling the sintering temperature and time within the above ranges, the following can be effectively avoided: if the sintering temperature in the third coating step is too low, it will result in a decrease in the degree of graphitization of the third cladding layer, which will affect its electrical conductivity, thereby affecting the capacity exertion of the positive electrode active material; if the sintering temperature is too high, it will result in an excessive degree of graphitization of the third cladding layer, which will affect the Li⁺ transmission, thereby affecting the capacity exertion of the positive electrode active material, etc.; if the sintering time is too short, it will result in the cladding layer being too thin, affecting its electrical conductivity, thereby affecting the capacity exertion of the positive electrode active material; if the sintering time is too long, it will result in the cladding layer being too thick, affecting the compaction density of the positive electrode active material, etc.

In the above-described first coating step, second coating step, and third coating step, the drying may all be carried out at a drying temperature of 100°C to 200°C, optionally 110°C to 190°C, more optionally 120°C to 180°C, even more optionally 120°C to 170°C, and most optionally 120°C to 160°C., and the drying time may be from 3 hours to 9 hours, optionally 4 hours to 8 hours, more optionally 5 hours to 7 hours, and most optionally about 6 hours.

By the positive electrode active material prepared by the method for preparing the positive electrode active material described in the present application, the secondary battery prepared therefrom has a reduced amount of Mn and Mn-site doping elements dissolved after cycling, and the high-temperature storage performance, the cycling performance, and the rate performance are improved. In addition, the raw materials are widely available, low cost and simple process, which is conducive to industrialization.

### Positive electrode plate

A third aspect of the present application provides a positive electrode plate comprising a positive electrode current collector and a positive electrode film layer provided on at least one surface of the positive electrode current collector, wherein the positive electrode film layer comprises the positive electrode material composition of the first aspect of the present application or the positive electrode material composition prepared by the method of the second aspect of the present application, and the positive electrode material composition is present in the positive electrode film layer in a content of 50 wt% or more, based on the total weight of the positive electrode film layer. The positive electrode current collector has two surfaces opposite to each other in the direction of its own thickness, and the positive electrode film layer is provided on either or both of two opposite surfaces of the positive electrode current collector.

In some embodiments, optionally, the positive electrode material composition is present in the positive electrode film layer in a content of 90-100 wt%, based on the total weight of the positive electrode film layer.

The positive electrode film layer does not exclude other positive electrode material compositions than the positive electrode material composition of the first aspect of the present application or the positive electrode material composition prepared by the method of the second aspect of the present application. For example, the positive electrode film may also comprise other positive electrode active materials than the positive electrode active materials covered with three layers mentioned in the present application, optionally, such other positive electrode active materials may comprise at least one of a lithium transition metal oxide and a modified compound thereof. By way of example, the other positive electrode material compositions may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

In some embodiments, a solid-liquid contact angle between the positive electrode film layer and a non-aqueous organic solvent is between 3° and 90°, optionally between 3° and 60°, and more optionally between 10° and 30°. The contact angle in a suitable range enables the battery to have a relatively high energy density, while further improving rate performance, cycling performance and/or high-temperature stability. In addition, the following conditions may be effectively avoided: if the contact angle is too small, it may not effectively alleviate the erosion of the surface of the positive electrode active material caused by the acidic substance in the electrolyte, resulting in a significant improvement of the cycling performance; and if the contact angle is too large, it may result in a poor electrolyte infiltration of the positive electrode film layer, affecting the rate performance and cycling performance of the battery. The solid-liquid contact angle between the positive electrode film layer and the non-aqueous organic solvent has a meaning known in the art and can be determined by a method known in the art, such as, by a method according to GBT 30693-2014. An exemplary test method comprises the following steps: dropping a drop of a non-aqueous organic solvent on the surface of the positive electrode plate at room temperature, and measuring its contact angle over a period of 60 seconds by a contact angle testing instrument. The testing instrument can be LSA 200 optical contact angle testing instrument of LAUDA Scientific Company in Germany. The non-aqueous organic solvent may be a non-aqueous organic solvent known in the art used for the non-aqueous electrolyte of a secondary battery, optionally, the non-aqueous organic solvent is ethylene carbonate (EC) .

In some embodiments, the positive electrode film layer has a porosity of 15% to 50%, and optionally 15% to 30%. The porosity in a suitable range enables the battery to have a relatively high energy density, while further improving rate performance, cycling performance and/or high-temperature stability. In addition, the following conditions may be effectively avoided: if the porosity is too small, it may result in a poor electrolyte infiltration of the positive electrode film layer, affecting the rate performance and cycling performance of the battery; and if the porosity is too large, it may affect the overall energy density of the battery. The porosity of the positive electrode film layer has a meaning known in the art and can be determined by a method known in the art, such as, by a method according to GB/T 24586-2009 after stripping the positive electrode film layer with a tape. Porosity P=[ (V2-V1) V/2]×100%. V1 (cm³) represents a true volume and can be determined by displacement using an inert gas with a small molecular diameter, such as helium, in combination with Archimedes' principle and Bohr's law, V2 (cm³) represents an apparent volume, V2=S×H×A, S (cm²) represents an area, H (cm) represents a thickness, and A represents a number of samples.

In some embodiments, the positive electrode film layer has a resistance of greater than 0 and less than or equal to 6 Ω. This ensures that the positive electrode film layer has a good electrical conductivity so that the secondary battery has a better kinetic performance. The resistance of the positive electrode film layer is known in the art in the sense that it can be tested by methods known in the art, such as by using an electrode plate resistance meter. An exemplary test method is as follows: taking a positive electrode plate coated on one side and cold-pressed (in the case of a positive electrode plate coated on both sides, the positive electrode film layer on one of the sides can be wiped off first) and placing it in parallel between two conductive terminals of the electrode plate resistivity meter, and fixing it by applying a certain amount of pressure, to obtain the resistance of the positive electrode film layer. Optionally, the diameter of the conductive terminals may be 14 mm, the pressure applied may be 15-27 MPa, and the time interval for picking the points may be 10-20 s. The testing instrument may be an IEST BER1000 electrode plate resistivity tester from Yuanneng Technology Ltd.

In some embodiments, the bonding force between the positive electrode film layer and the positive electrode collector is 0.5 MPa or more. In this range, the phenomenon of powder falling from the positive electrode plate can be prevented from occurring, which is conducive to the performance of the secondary battery. The bonding force between the positive electrode film layer and the positive electrode current collector is known in the art in the sense that it can be tested by methods known in the art. An exemplary test method is as follows: cutting the positive electrode plate into a test sample of 100 mm in length and 10 mm in width; taking a piece of stainless steel plate of 25 mm in width, affixing double-sided adhesive tape (e.g., with a width of 11 mm), pasting the test sample to the double-sided adhesive tape on the stainless steel plate, and rolling back and forth on the surface thereof three times with a 2, 000 g pressure roller (e.g., with a roller pressure rate of 300 mm/min) ; bending the test sample at 180°, manually peeling off the positive electrode film layer and positive electrode current collector of the test sample by 25 mm, fixing the test sample on a testing machine (e.g., INSTRON 336), so that the peeling surface is consistent with the force line of the testing machine, and the testing machine is continuously peeled off at 30 mm/min to obtain a peeling force curve, and taking the average value of the smooth breaks as the peeling force Fo; the adhesion between the positive electrode film layer and the positive electrode current collector = Fo/width of the test sample.

In some embodiments, the positive electrode film layer has a surface density of 0.006 g/cm² to 0.065 g/cm², thereby facilitating the enhancement of the volumetric energy density of the secondary battery. The surface density of the positive electrode film layer is known in the art in the sense that it can be tested using methods known in the art. An exemplary test method is as follows: taking a positive electrode plate coated on one side and cold-pressed (if it is a positive electrode plate coated on both sides, the positive pole film layer on one side can be wiped off first) and punching and cutting it into a small circle with an area of Si, weighing it, and recording it as M₁; then wiping off the positive electrode film layer of the positive electrode plate after weighing as described above, and weighing the weight of the positive electrode current collector, and recording it as M0; and the surface density of the positive electrode film layer= (M₁-M₀) /S₁.

In some embodiments, the positive electrode film layer has a absorption rate to the electrolyte of 0.0125 µg/s to 100 µg/s, optionally 0.5 µg/s to 40 µg/s, whereby a good infiltration of the electrolyte in the electrode assembly can be ensured to enable it to rapidly enter the interior of the electrode assembly and form a SEI film on the surface of the positive electrode plate in a timely manner, and thereby improve the electrochemical performance of the secondary battery.

The positive electrode film layer is usually formed by applying the positive electrode slurry on the positive electrode current collector, followed by drying and cold pressing. The positive electrode slurry is typically formed by dispersing the positive electrode active material, an optional conductive agent, an optional binder, and any other components in a solvent and stirring uniformly. The solvent may be N-methylpyrrolidone (NMP), but is not limited thereto.

It should be noted that each of the positive electrode film layer parameters (e.g., contact angle, porosity, electrical resistance, bonding force, surface density, absorption rate to the electrolyte, etc.) given in the present application refers to the parameters of the positive electrode film layer on one side of the positive electrode current collector. When the positive electrode film layer is provided on both sides of the positive electrode current collector, it is considered to fall within the scope of protection of the present application that the parameters of the positive electrode film layer on either side of the current collector satisfy the requirement of the present application.

In addition, in the above tests for all parameter of the positive electrode film layer, the sample can be obtained during the preparation of the positive electrode plate or the battery, or from a prepared battery.

When the sample is obtained from the prepared battery, as an example, the sample can be obtained by the following steps: discharging the battery (generally keeping the battery in a fully discharged state for safety) ; disassembling the battery and then taking out the positive electrode plate, and soaking the positive electrode plate in dimethyl carbonate (DMC) for a certain period of time (for example, 2-10 hours) ; then taking out the positive electrode plate and performing a drying treatment at a certain temperature and time (for example, 60°C for 4 hours), taking out the positive electrode plate after the drying treatment, and at this point, obtaining the sample from the dried positive electrode plate for testing relevant parameters of the positive electrode film layer.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in secondary batteries. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode film layer may also optionally comprise a negative conductive agent. In the present application, the type of the negative conductive agent is not particularly limited and, as an example, the negative conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS) .

In some embodiments, the negative electrode film layer may optionally also include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer covering the surface of the negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution) .

In some embodiments, an electrolytic solution is used as the electrolyte. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis (trifluoromethane sulfonimide) (LiTFSI), lithium trifluoromethane sulfonate (LiTFS), lithium difluorooxalate borate (LiDFOB), lithium bisoxalate borate (LiBOB), lithium difluorophosphate (LiPOzFz), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), dimethyl sulfone (MSM), methyl ethyl sulfone (EMS) and diethyl sulfone (ESE) .

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary batteries using an electrolytic solution and some secondary batteries using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, nonwoven fabrics, polyethylene, polypropylene, and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process and/or a laminating process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

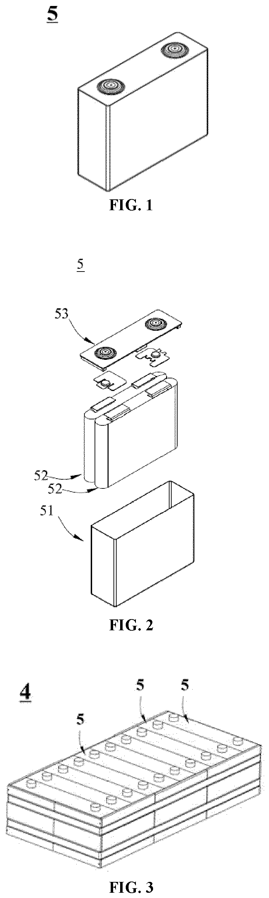

The present application does not have particular limitation to the shape of the secondary battery. The secondary battery may be cylindrical, square, or in other arbitrary shape. Fig. 1 shows a secondary battery 5 with a square structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or laminated to form an electrode assembly 52, which is encapsulated in the receiving cavity. A non-aqueous electrolyte is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and a non-aqueous electrolyte may be assembled to form a secondary battery. As an example, a positive electrode plate, a separator, and a negative electrode plate can be made into an electrode assembly by a winding process or a laminating process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary batteries according to the present application can be assembled into a battery module, and the number of secondary batteries contained in the battery module can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

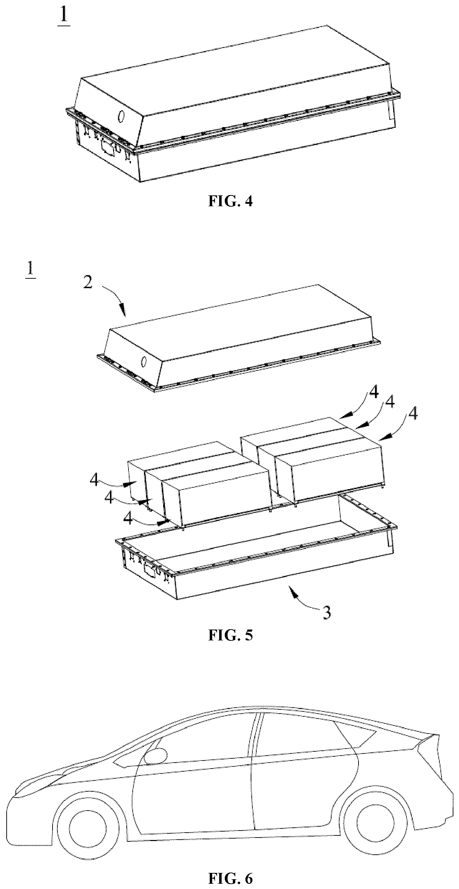

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to coverthe lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

Embodiments of the present application involve the following sources of raw materials:

| Name | Chemical formula | Supplier | Specification |
|---|---|---|---|
| Manganese Carbonate | MnCO₃ | Shandong Xiya Reagent Co., Ltd. | 1Kg |
| Lithium Carbonate | Li₂CO₃ | Shandong Xiva Reagent Co., Ltd. | 1Kg |
| Magnesium Carbonate | MgCO₃ | Shandong Xiva Reagent Co., Ltd. | 1Kg |
| Zinc Carbonate | ZnCO₃ | Wuhan Xinru Chemical Industry Co., Ltd. | 25Kg |
| Ferrous Carbonate | FeCO₃ | Xian Languang Chemical Industry Co., Ltd. | 1Kg |
| Nickel Sulfate | NiCO₃ | Shandong Xiva Reagent Co., Ltd. | 1Kg |
| Titanium Sulfate | Ti (SO₄) ₂ | Shandong Xiva Reagent Co., Ltd. | 1Kg |
| Cobalt Sulfate | CoSO₄ | Xiamen Zhixin Chemical Industry Co., Ltd. | 500g |
| Vanadium Dichloride | VCl₂ | Shanghai Jinjinle Industry Co., Ltd. | 1Kg |
| Oxalic acid dihydrate | C₂H₂O₄.2 (H₂O) | Shanghai Jinjinle Industry Co., Ltd. | 1Kg |
| Ammonium dihydrogen phosphate | NH₄H₂PO₄ | Shanghai ChengShao Biological Technology Co., Ltd. | 500g |
| Sucrose | C₁₂H₂₂O₁₁ | Shanghai Yuanye Biological Technology Co., Ltd. | 100g |
| Dilute sulfuric acid | H₂SO₄ | Shenzhen Haisian Biological Technology Co., Ltd. | 60% by mass |
| Dilute Nitric Acid | HNO₃ | Anhui Lingtian Fine Chemical Co., Ltd. | 60% by mass |
| Silicic acid | H₂SiO₃ | Shanghai Yuanye Biological Technology Co., Ltd. | 100g, 99.8% by mass |

### I. Preparation of battery

### Example 1

Step 1: Preparation of positive electrode active material
Step S1: Preparation of Fe, Co, V and S co-doped manganese oxalate
   689.6 g of manganese carbonate, 455.27 g of ferrous carbonate, 4.65 g of cobalt sulfate, and 4.87 g of vanadium dichloride were added to a mixer and mixed thoroughly for 6 hours. The obtained mixture was then transferred to a reactor and 5 L of deionized water and 1260.6 g of oxalic acid dihydrate were added, heated to 80 °C, and stirred sufficiently at 500 rpm for 6 h. The mixture was mixed homogeneously until the reaction was terminated without bubbles being generated to obtain a Fe, Co, and V co-doped manganese oxalate suspension. The suspension was then filtered, dried at 120°C, and then sanded to obtain manganese oxalate particles with a particle size of 100 nm.
Step S2: Preparation of core Li_{0.997}Mn0_{.60}Fe_{0.393}V_{0.004}Co_{0.003}P_{0.997}S_{0.003}O₄
   1793.1 g of manganese oxalate prepared in step S1 as well as 368.3 g of lithium carbonate, 1146.6 g of ammonium dihydrogen phosphate, and 4.9 g of dilute sulfuric acid were added into 20 L of deionized water, mixed thoroughly, and reacted with homogeneous mixing for 10 hours at 80 °C to obtain a slurry. The slurry was transferred to a spray drying equipment for spray drying and granulation, and dried at a temperature of 250°C to obtain a powder. The powder was sintered in a roller kiln at 700°C for 4 hours in a protective atmosphere (90% nitrogen and 10% hydrogen) to obtain the core material.
Step S3: Preparation of the first cladding layer suspension
   Li₂FeP₂O₇ solution was prepared by dissolving 7.4 g of lithium carbonate, 11.6 g of ferrous carbonate, 23.0 g of ammonium dihydrogen phosphate, and 12.6 g of oxalic acid dihydrate in 500 mL of deionized water, controlling the pH to be 5, and then stirred and reacted for 2 hours at room temperature to obtain the solution, after which the solution was warmed up to 80°C and kept at this temperature for 4 hours to obtain the first cladding layer suspension.
Step S4: Coating of the first cladding layer
   1571.9 g of the doped lithium manganese phosphate core material obtained in step S2 is added to the first cladding layer suspension (with a coating material content of 15.7 g) obtained in step S3, and mixed with sufficient stirring for 6 hours, and after mixing well, transferred to an oven at 120°C for drying for 6 hours, and then sintered at 650°C for 6 hours to obtain the pyrophosphate-coated material.
Step S5: Preparation of the second cladding layer suspension
   3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and then stirred and reacted for 6 hours to obtain a solution, and then the solution was warmed up to 120°C and kept at this temperature for 6 hours to obtain the second cladding layer suspension.
Step S6: Coating of the second cladding layer
   1586.8 g of the pyrophosphate-coated material obtained in Step S4 was added to the second cladding layer suspension (with a coating material content of 47.1 g) obtained in Step S5, and mixed with thorough stirring for 6 hours, and after the mixture was homogeneous, it was transferred to an oven at 120°C for drying for 6 hours, and then at 700°C for 8 hours to obtain the two-layer coated material.
Step S7: Preparation of the aqueous solution of the third cladding layer
   37.3 g of sucrose was dissolved in 500 g of deionized water, then stirred and fully dissolved to obtain an aqueous solution of sucrose.
Step S8: Coating of the third cladding layer
   1633.9 g of the two-layer coated material obtained in Step S6 was added to the sucrose solution obtained in Step S7, stirred and mixed together for 6 hours, and after mixing uniformly, transferred to an oven at 150°C to dry for 6 hours, and then sintered at 700°C for 10 hours to obtain the three-layer coated material, i.e., the positive electrode active material.
Step 2: Preparation of positive electrode plate
   The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.4:1.5:4.5:0.6 were stirred in a blender until the materials are evenly mixed to obtain a positive electrode material composition. The positive electrode material composition was mixed evenly in N-methylpyrrolidone (NMP) as a solvent system to form a slurry. The above slurry was applied with a surface density of 0.018g/cm² on aluminum foil and dried, cold pressed and slit to obtain a positive electrode plate.
Step 3: Preparation of negative electrode plate
   The negative electrode active material artificial graphite, hard carbon, acetylene black as a conductive agent, butadiene rubber (SBR) as a binder, and sodium carboxymethyl cellulose (CMC) as a thickener were mixed in deionized water in a weight ratio of 90:5:2:2:1 to form a slurry, and then the slurry was applied with a surface density of 0.0075g/cm² on a copper foil and dried, cold pressed and slit to obtain a negative electrode plate.
Step 4: Preparation of electrolyte
   In an argon atmosphere glove box (H₂O<0.1ppm, O₂<0.1ppm), the organic solvent ethylene carbonate (EC) /ethyl methyl carbonate (EMC) was mixed homogeneously in accordance with the volume ratio of 3/7, and 12.5 wt% (based on the weight of the solvent of ethylene carbonate/ethyl methyl carbonate) of LiPF₆ was added to dissolve in the organic solvent mentioned above, and stirred homogeneously, to obtain the electrolyte.
Step 5: Preparation of separator
   A commercially available PP-PE copolymer microporous film with a thickness of 20 µm and an average pore size of 80 nm was used (from JOCO Electronic Technology Company, model 20) .
Step 6: Preparation of full battery

The resulting positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolyte, and encapsulated to obtain a full battery.

### Preparation of button battery

The positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89.4:5:5:0.6 were stirred in a blender until the materials are evenly mixed to obtain a positive electrode material composition. The positive electrode material composition was added to N-methylpyrrolidone (NMP) and stirred in a drying room to make a slurry. The above slurry was applied to an aluminum foil, dried and cold pressed to form a positive electrode plate. The coating amount was 0.015g/cm² and the compaction density was 2.0g/cm³.

Lithium sheet was used as a negative electrode, a 1 mol/L solution of LiPF₆ in a 1:1:1 volume ratio of ethylene carbonate (EC), diethyl carbonate (DEC) and dimethyl carbonate (DMC) was used as an electrolyte, and they were assembled together with the above prepared positive electrode plate in a button battery box to form a button battery (hereinafter also referred to as "button") .

### Examples 2-29

The positive electrode active materials of Examples 2-27 were prepared in a manner similar to that of Example 1, except for the differences in the preparation of the positive electrode active materials described in Tables 1 through 6.

### Examples 30-42

The positive electrode active materials of Examples 30-42 were prepared in a manner similar to that of Example 1, except for the differences in the preparation of the positive electrode active materials described in Tables 7 and 8.

### Examples 43-47

The process was the same as that of Example 1 except that the weight percent of aminoethyl aminopropyl polydimethylsiloxane in the positive electrode material composition was adjusted in the preparation of the full battery and the preparation of the button battery, see Table 9 for the differences.

### Example 43

1) Preparation of positive electrode material composition: Example 3 was the same as Example 1, with the exception that, the amount of Li₂CO₃ was adjusted to 0.496 mol, Mo (SO₄) ₃ was replaced with W (SO₄) ₃, and H₄SiO₄ was replaced with H₂SO₄.

### Example 43

Preparation of full battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.99:1.5:4.5:0.01 were stirred in a blender until the materials were evenly mixed to obtain a positive electrode material composition.

Preparation of button battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.99:1.5:4.5:0.01 were stirred in a blender until the materials were evenly mixed to obtain a positive electrode material composition.

### Example 44

Preparation of full battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93.9:1.5:4.5:0.1 were stirred in a blender until the materials were evenly mixed to obtain a positive electrode material composition.

Preparation of button battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89.9:5:5:0.1 were stirred in a blender until the materials were evenly mixed to obtain a positive electrode material composition.

### Example 45

Preparation of full battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 93:1.5:4.5: 1 were stirred in a blender until the materials were evenly mixed to obtain a positive electrode material composition.

Preparation of button battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89:5:5: 1 were stirred in a blender until the materials were evenly mixed to obtain a positive electrode material composition.

### Example 46

Preparation of full battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 92:1.5:4.5:2 were stirred in a blender until the materials were evenly mixed to obtain a positive electrode material composition.

Preparation of button battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 88:5:5:2 were stirred in a blender until the materials were evenly mixed to obtain a positive electrode material composition.

### Example 47

Preparation of full battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 89: 1.5:4.5:5 were stirred in a blender until the materials were evenly mixed to obtain a positive electrode material composition.

Preparation of button battery: the positive electrode active material, acetylene black as a conductive agent, polyvinylidene difluoride (PVDF) as a binder, and aminoethyl aminopropyl polydimethylsiloxane (having polar functional groups -CH₂NH₂ and -CH₂NH-, a mass percentage *α* of 12%, and a number average molecular weight of 3700) in a weight ratio of 85:5:5:5 were stirred in a blender until the materials were evenly mixed to obtain a positive electrode material composition.

### Examples 48-65

Examples 48-65 were the same as Example 1, with the exception that aminoethyl aminopropyl polydimethylsiloxane in the positive electrode material composition was replaced with the following organopolysiloxane compounds, respectively in Table 9.

Example 48: Polydimethyl siloxane (having a mass percentage *α* of the polar functional group of about 0%, and a number average molecular weight of 1200) .

Example 49: Polymethyl chloropropyl siloxane (having a polar functional group CH₂Cl, a mass percentage *α* of 30.2%, and a number average molecular weight of 2500) .

Example 50: Polymethyl trifluoropropyl siloxane (having a polar functional group -CF₃, a mass percentage *α* of 44.0%, and a number average molecular weight of 1400) .

Example 51: Mercaptopropyl polysiloxane (having a polar functional group -CH₂SH, a mass percentage *α* of about 15.0%, and a molecular weight per number 2000).

Example 52: Terminal hydroxyl polydimethylsiloxane (having a polar functional group -OH, a mass percentage *α* of about 3.4%, and a number average molecular weight of 1000) .

Example 53: Methoxy terminated polydimethylsiloxane (having a polar functional group of methoxy, a mass percentage *α* of about 3.1%, and a number average molecular weight of 2800) .

Example 54: Terminal polyether polydimethylsiloxane (having a polar functional group of a polyether chain segment, a mass percentage *α* of about 10.0%, and a number average molecular weight of 2110) .

Example 55: Pendant phosphate-grafted polydimethylsiloxane (having a polar functional group of a phosphate group, a mass percentage *α* of about 1.4%, and a number average molecular weight of 15600) .

Example 56: 1, 3, 5, 7-octamethyl cyclotetrasiloxane (having a mass percentage *α* of the polar functional group of about 0%, and a molecular weight of 280) .

Example 57: Decamethylcyclopentasiloxane (having a mass percentage *α* of the polar functional group of about 0%, and a molecular weight of 370) .

Example 58: Terminal polyether polydimethylsiloxane (having a polar functional group of a polyether chain segment, a mass percentage *α* of about 55.0%, and a number average molecular weight of 25132) .

Example 59: Polydimethylsiloxane (having a mass percentage *α* of the polar functional group of about 0%, and a number average molecular weight of 400) .

Example 60: Polydimethylsiloxane (having a mass percentage *α* of the polar functional group of about 0%, and a number average molecular weight of 10000) .

Example 61: Polydimethylsiloxane (having a mass percentage *α* of the polar functional group of about 0%, and a number average molecular weight of 50000) .

Example 62: Polydimethylsiloxane (having a mass percentage *α* of the polar functional group of about 0%, and a number average molecular weight of 80000) .

Example 63: Polydimethylsiloxane (having a mass percentage *α* of the polar functional group of about 0%, and a number average molecular weight of 100000) .

Example 64: Polydimethylsiloxane (having a mass percentage *α* of the polar functional group of about 0%, and a number average molecular weight of 300, 000) .

Example 65: Polydimethylsiloxane (having a mass percentage *α* of the polar functional group of about 0%, and a number average molecular weight of 400000) .

### Comparative Examples 1-18

The positive electrode active materials of Comparative Examples 1-18 were prepared in a manner similar to that Example 1, and the differences in the preparation of the positive electrode active materials were described in Tables 1 through 6. Comparative Examples 1-2, 4-10, and 12 were not covered with the first cladding layer, and thus did not have steps S3, S4; Comparative Example s 1-11 were not covered with the second cladding layer, and thus did not have steps S5 and S6.

The full batteries and button batteries of Comparative Examples 1-18 were prepared in a manner similar to that of Example 1, except that aminoethylaminopropyl polydimethylsiloxane was not added to the positive material compositions.

In addition, the first cladding layer substance and/or the second cladding layer substance used in all Examples and Comparative Examples of the present application were by default crystalline if not indicated.

**Table 1: Materials for the core**

| No. | Core | Material used in step S1 | Material used in step S1 |
|---|---|---|---|
| Comparative Examples 1 and 13 | LiMnPO₄ | manganese carbonate, 1149.3g; water, 5L; oxalic acid dihydrate, 1260.6g | manganese oxalate dihydrate obtained in step S1 (counted as C₂O₄Mn•2H₂O), 1789.6g; lithium carbonate, 369.4g; ammonium dihydrogen phosphate, 1150.1g; water, 20L |
| Comparative Example 2 | LiMn_{0.60}Fe_{0.40}PO₄ | manganese carbonate, 689.6g; ferrous carbonate, 463.4g; water, 5L; oxalic acid dihydrate, 1260.6g | ferromanganese oxalate dihydrate obtained in step S1 (counted as C₂O₄Mn_{0.60}Fe_{0.40}•2H₂O), 1793.2g; lithium carbonate, 369.4g; ammonium dihydrogen phosphate, 1150.1g; water, 20L |
| Comparative Example 3 | LiMn_{0.80}Fe_{0.20}PO₄ | manganese carbonate, 919.4g; ferrous carbonate, 231.7g; water, 5L; oxalic acid dihydrate, 1260.6g | ferromanganese oxalate dihydrate obtained in step S1 (counted as C₂O₄Mn_{0.80}Fe_{0.20}•2H₂O), 1791.4g; lithium carbonate, 369.4g; ammonium dihydrogen phosphate, 1150.1g; water, 20L |
| Comparative Example 4 | LiMn_{0.70}Fe_{0.295}V_{0.005}PO₄ | manganese carbonate, 804.5g; ferrous carbonate, 341.8g; vanadium dichloride, 6.1g; water, 5L; oxalic acid dihydrate, 1260.6g | ferrovanadium manganese oxalate dihydrate obtained in step S1 (counted as C₂O₄Mn_{0.70}Fe_{0.295}V_{0.005}•2H₂O), 1792.0g; lithium carbonate, 369.4g; ammonium dihydrogen phosphate, 1150.1g; water, 20L |
| Comparative Examples 5 and 15 | LiMn_{0.60}Fe_{0.395}Mg_{0.005}PO₄ | manganese carbonate, 689.6g; ferrous carbonate, 457.6g; magnesium carbonate, 4.2g; water, 5L; oxalic acid dihydrate, 1260.6g | ferromanganese magnesium oxalate dihydrate obtained in step S1 (counted as C₂O₄Mn_{0.60}Fe_{0.395}Mg_{0.005}•2H₂O), 1791.6g; lithium carbonate, 369.4g; ammonium dihydrogen phosphate, 1150.1g; water, 20L |
| Comparative Example 6 | LiMn_{0.60}Fe_{0.35}Ni_{0.05}PO₄ | manganese carbonate, 689.6g; ferrous carbonate, 405.4g; nickel carbonate, 59.3g; water, 5L; oxalic acid dihydrate, 1260.6g | nickel ferromanganese oxalate dihydrate obtained in step S1 (counted as C₂O₄Mn_{0.60}Fe_{0.35}Ni_{0.05}•2H₂O), 1794.6g; lithium carbonate, 369.4g; ammonium dihydrogen phosphate, 1150.1g; water, 20L |
| Comparative Example 7 and 9 | LiMn_{0.60}Fe_{0.395}V_{0.002}Ni_{0.003}PO₄ | manganese carbonate, 689.6g; ferrous carbonate, 457.6g; vanadium dichloride, 2.4g; nickel carbonate, 3.6g; water, 5L; oxalic acid dihydrate, 1260.6g | nickel manganese iron vanadium oxalate dihydrate obtained in step S1 (counted as C₂O₄Mn_{0.60}Fe_{0.395}V_{0.002}Ni_{0.003}•2H₂O), 1793.2g; lithium carbonate, 369.4g; ammonium dihydrogen phosphate, 1150.1g; water, 20L |
| Comparative Example 8 | LiMn_{0.60}Fe_{0.395}V_{0.002}Mg_{0.003}PO₄ | manganese carbonate, 689.6g; ferrous carbonate, 457.6g; vanadium dichloride, 2.4g; magnesium carbonate, 2.53g; water, 5L; oxalic acid dihydrate, 1260.6g | magnesium manganese iron vanadium oxalate dihydrate obtained in step S1 (counted as C₂O₄Mn_{0.60}Fe_{0.395}V_{0.002}Mg_{0.003}•2H₂O), 1792.1g; lithium carbonate, 369.4g; ammonium dihydrogen phosphate, 1150.1g; water, 20L |
| Comparative Examples 10-12, Comparative Example 16-18 and Example 1-10 | Li_{0.997}Mn_{0.60}Fe_{0.393}V_{0.004}Co_{0.003}P_{0.997}S_{0.003}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.395}V_{0.004}Co_{0.003}•2H₂O), 1793.1g; lithium carbonate, 368.3g; ammonium dihydrogen phosphate, 1146.6g; dilute sulfuric acid, 4.9g; water, 20L |
| Comparative Example 14 | Li_{1.2}MnP_{0.8}Si_{0.2}O₄ | manganese carbonate, 1149.3g; water, 5L; oxalic acid dihydrate, 1260.6g | manganese oxalate dihydrate obtained in step S1 (counted as C₂O₄Mn•2H₂O), 1789.6g; lithium carbonate, 443.3g; ammonium dihydrogen phosphate, 920.1g; silicic acid, 156.2g; water, 20L |
| Example 11 | Li_{1.001}Mn_{0.60}Fe_{0.393}V_{0.004}Co_{0.003}P_{0.999}Si_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.8g; ammonium dihydrogen phosphate, 1148.9g; silicic acid, 0.8g; water, 20L |
| Example 12 | LiMn_{0.60}Fe_{0.393}V_{0.004}Co_{0.003}P_{0.998}N_{0.002}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.4g; ammonium dihydrogen phosphate, 1147.8g; dilute nitric acid, 2.7g; water, 20L |
| Example 13 | Li_{0.995}Mn_{0.65}Fe_{0.341} V_{0.004}Co_{0.005}P_{0.995}S_{0.005}O₄ | manganese carbonate, 747. Ig; ferrous carbonate, 395.1g; cobalt sulfate, 7.8g; vanadium dichloride, 4.9g; water, 5L; oxalic acid dihydrate, 1260.6g | manganese iron vanadium cobalt oxalate dihydrate obtained in step S1 (counted as C₂O₄Mn_{0.65}Fe_{0.341}V_{0.004}Co_{0.005}•2H₂O), 1792.7g; lithium carbonate, 367.6g; ammonium dihydrogen phosphate, 1144.3g; dilute sulfuric acid, 8.2g; water, 20L |
| Example 14 | Li_{1.002}Mn_{0.70}Fe_{0.293}V_{0.004}Co_{0.003}P_{0.998}Si_{0.002}O₄ | manganese carbonate, 804.6g; ferrous carbonate, 339.5g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.70}Fe_{0.293}V_{0.004}Co_{0.003}•2H₂O), 1792.2g; lithium carbonate, 370.2g; 1147.8; silicic acid, 1.6g; water, 20L |
| Examples 15 and 17 | LiMn_{0.60}Fe_{0.393}V_{0.004}Co_{0.003}P_{0.999}N_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.4g; ammonium dihydrogen phosphate, 1148.9g; dilute nitric acid, 1.4g; water, 20L |
| Example 16 | Li_{0.997}Mn_{0.60}Fe_{0.393}V_{0.004}Co_{0.003}P_{0.997}S_{0.003}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 368.7g; ammonium dihydrogen phosphate, 1146.6g; dilute sulfuric acid, 4.9g; water, 20L |
| Example 18 | LiMn_{0.60}Fe_{0.393}V_{0.004}Mg_{0.003}P_{0.995}N_{0.005}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O), 1791.1g; lithium carbonate, 369.4g; ammonium dihydrogen phosphate, 1144.3g; dilute nitric acid, 7.0g; water, 20L |
| Example 19 | Li_{0.999}Mn_{0.60}Fe_{0.393}V_{0.004}Mg_{0.003}P_{0.999}S_{0.001}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O), 1791.1g; lithium carbonate, 369.Og; ammonium dihydrogen phosphate, 1148.9g; dilute sulfuric acid, 1.6g; water, 20L |
| Example 20 | Li_{0.998}Mn_{0.60}Fe_{0.393}V_{0.004}Ni_{0.003}P_{0.998}S_{0.002}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.60}Fe_{0.393}V_{0.004}Ni_{0.003}•2H₂O), 1792.2g; lithium carbonate, 368.7g; ammonium dihydrogen phosphate, 1147.8g; dilute sulfuric acid, 3.2g; water, 20L |
| Example 21-24 | Li_{1.001}Mn_{0.60}Fe_{0.393}V_{0.004}Ni_{0.003}P_{0.999}Si_{0.001}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1 ( 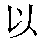 C₂O₄Mn_{0.60}Fe_{0.393}V_{0.004}Ni_{0.003}•2H₂O 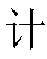 ), 1793.1g; lithium carbonate, 369.8g; ammonium dihydrogen phosphate, 1148.9g; silicic acid, 0.8g; water, 20L |
| Example 25 | Li_{1.001}Mn_{0.50}Fe_{0.493}V_{0.004}Ni_{0.003}P_{0.999}Si_{0.001}O₄ | manganese carbonate, 574.7g; ferrous carbonate, 571.2g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.50}Fe_{0.493}V_{0.004}Ni_{0.003}•2H₂O), 1794.0g; lithium carbonate, 369.8g; ammonium dihydrogen phosphate, 1148.9g; silicic acid, 0.8g; water, 20L |
| Example 26 | Li_{1.001}Mn_{0.999}Fe_{0.001}P_{0.999}Si_{0.001}O₄ | manganese carbonate, 1148.2g; ferrous carbonate, 1.2g; water, 5L; oxalic acid dihydrate, 1260.6g | ferromanganese oxalate dihydrate obtained in step S1 (counted as C₂O₄Mn_{0.999}Fe_{0.001}•2H₂O), 1789.6g; lithium carbonate, 369.8g; ammonium dihydrogen phosphate, 1148.9g; silicic acid, 0.8g; water, 20L |
| Example 27 | Li₁Mn_{0.60}Fe_{0.393}V_{0.004}Ni_{0.003}P_{0.9}N_{0.100}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1 (counted as C₂O₄Mn_{0.60}Fe_{0.393}V_{0.004}Ni_{0.003}•2H₂O), 1793.1g; lithium carbonate, 369.4g; ammonium dihydrogen phosphate, 1035.1g; dilute nitric acid, 140.0g; water, 20L |
| Example 28 | Li_{1.001}Mn_{0.40}Fe_{0.593}V_{0.004}Ni_{0.003}P_{0.999}Si_{0.001}O₄ | manganese carbonate, 459.7g; ferrous carbonate, 686.9g; vanadium dichloride, 4.8g; nickel carbonate, 3.6g; water, 5L; oxalic acid dihydrate, 1260.6g | nickel manganese iron vanadium oxalate dihydrate obtained in step S1 (counted as C₂O₄Mn_{0.40}Fe_{0.593}V_{0.004}Ni_{0.003}•2H₂O), 1794.9g; lithium carbonate, 369.8g; ammonium dihydrogen phosphate, 1148.9g; silicic acid, 0.8g; water, 20L |
| Example 29 | Li_{1.001}Mn_{0.40}Fe_{0.393}V_{0.204}Ni_{0.003}P_{0.999}Si_{0.001}O₄ | manganese carbonate, 459.7g; ferrous carbonate, 455.2g; vanadium dichloride, 248.6g; nickel carbonate, 3.6g; water, 5L; oxalic acid dihydrate, 1260.6g | nickel manganese iron vanadium oxalate dihydrate obtained in step S1 (counted as C₂O₄Mn_{0.40}Fe_{0.393}V_{0.204}Ni_{0.003}•2H₂O), 1785.1g; lithium carbonate, 369.8g; ammonium dihydrogen phosphate, 1148.9g; silicic acid, 0.8g; water, 20L |

**Table 2: Preparation of the first cladding layer suspension (Step S3:)**

| No. | Material for the first cladding layer | Preparation of the first cladding layer suspension |
|---|---|---|
| Comparative Examples 3, 16 | Amorphous Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Comparative Example 11, 13-15, 17-18; Examples 1-14, 19, 21-29 | crystalline Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Examples 15-16 | crystalline Al₄ (P₂O₇)₃ | 53.3g aluminum chloride; 34.5g ammonium dihydrogen phosphate; 18.9g oxalic acid dihydrate; pH being controlled to 4 |
| Examples 17-18, 20 | crystalline Li₂NiP₂O₇ | 7.4g lithium carbonate; 11.9g nickel carbonate; 23.0g ammonium dihydrogen phosphate; 12.6g oxalic acid dihydrate; pH being controlled to 5 |

**Table 3: Coating of the first cladding layer (Step S4:)**

| No. | Material for the first cladding layer and the amount (based on the weight of the core) | The amount of the core added in step S4 | Step S4: Coating of the first cladding layer | | | | |
|---|---|---|---|---|---|---|---|
| | | | The amount of corresponding coating material in the first cladding layer suspension | Mixing time (hour) | Drying temperatu re (°C) | Sintering temperatu re (°C) | Sintering time (hour) |
| Comparati ve Example 3 | 2% amorphous Li₂FeP₂O₇ | 1570.4g | 31.4g | 6 | 120 | 500 | 4 |
| Comparati ve Example 11 | 1% crystalline Li₂FeP₂O₇ | 1571.1g | 15.7g | 6 | 120 | 650 | 6 |
| Comparati ve Example 13 | 2% crystalline Li₂FeP₂O₇ | 1568.5g | 31.4g | 6 | 120 | 650 | 6 |
| Comparati ve Example 14 | 2% crystalline Li₂FeP₂O₇ | 1562.8g | 31.2g | 6 | 120 | 650 | 6 |
| Comparati ve Example 15 | 2% crystalline Li₂FeP₂O₇ | 1570.6g | 31.4g | 6 | 120 | 650 | 6 |
| Comparati ve Example 16 | 2% amorphous Li₂FeP₂O₇ | 1571.1g | 31.4g | 6 | 120 | 500 | 4 |
| Comparati ve Example 17 | 2% crystalline Li₂FeP₂O₇ | 1571.1g | 31.4g | 6 | 120 | 650 | 6 |
| Comparati ve Example 18 | 1% crystalline Li₂FeP₂O₇ | 1571.9g | 15.7g | 6 | 120 | 650 | 6 |
| Examples 1-4, 8-10 | 1% crystalline Li₂FeP₂O₇ | 1571.9g | 15.7g | 6 | 120 | 650 | 6 |
| Example 5 | 2%crystalline Li₂FeP₂O₇ | 1571.9g | 31.4g | 6 | 120 | 650 | 6 |
| Example 6 | 3% crystalline Li₂FeP₂O₇ | 1571.1g | 47.1g | 6 | 120 | 650 | 6 |
| Example 7 | 5% crystalline Li₂FeP₂O₇ | 1571.9g | 78.6g | 6 | 120 | 650 | 6 |
| Example 11 | 1% crystalline Li₂FeP₂O₇ | 1572.1g | 15.7g | 6 | 120 | 650 | 6 |
| Example 12 | 1% crystalline Li₂FeP₂O₇ | 1571.7g | 15.7g | 6 | 120 | 650 | 6 |
| Example 13 | 2% crystalline Li₂FeP₂O₇ | 1571.4g | 31.4g | 6 | 120 | 650 | 6 |
| Example 14 | 2.5% crystalline Li₂FeP₂O₇ | 1571.9g | 39.3g | 6 | 120 | 650 | 6 |
| Example 15 | 2% crystalline Al₄ (P₂O₇)₃ | 1571.9g | 31.4g | 6 | 120 | 680 | 8 |
| Example 16 | 3% crystalline Al₄ (P₂O₇)₃ | 1571.9g | 47.2g | 6 | 120 | 680 | 8 |
| Example 17 | 1.5% crystalline Li₂NiP₂O₇ | 1571.9g | 23.6g | 6 | 120 | 630 | 6 |
| Example 18 | 1% crystalline Li₂NiP₂O₇ | 1570.1g | 15.7g | 6 | 120 | 630 | 6 |
| Example 19 | 2% crystalline Li₂FeP₂O₇ | 1571.0g | 31.4g | 6 | 120 | 650 | 6 |
| Example 20 | 1% crystalline Li₂NiP₂O₇ | 1571.9g | 15.7g | 6 | 120 | 630 | 6 |
| Examples 21-24 | 2% crystalline Li₂FeP₂O₇ | 1572.1g | 31.4g | 6 | 120 | 650 | 6 |
| Example 22 | 5.50% crystalline Li₂FeP₂O₇ | 1572.1g | 86.5g | 6 | 120 | 650 | 6 |
| Example 25 | 1% crystalline Li₂FeP₂O₇ | 1573.0g | 15.7g | 6 | 120 | 650 | 6 |
| Example 26 | 1% crystalline Li₂FeP₂O₇ | 1568.6g | 15.7g | 6 | 120 | 650 | 6 |
| Example 27 | 1% crystalline Li₂FeP₂O₇ | 1569.2g | 15.7g | 6 | 120 | 650 | 6 |
| Example 28 | 2% crystalline Li₂FeP₂O₇ | 1573.9g | 31.4g | 6 | 120 | 650 | 6 |
| Example 29 | 2%crystalline Li₂FeP₂O₇ | 1564.1g | 31.2g | 6 | 120 | 650 | 6 |

**Table 4: Preparation of the second cladding layer suspension (Step S5:)**

| No. | Material for the second cladding layer | Step S5: Preparation of the second cladding layer suspension |
|---|---|---|
| Comparative Example 12, 18; Example 1-14, 18-19, 25-27 | crystalline LiFePO₄ | 3.7g lithium carbonate; 11.6g ferrous carbonate; 11.5g ammonium dihydrogen phosphate; 12.6g oxalic acid dihydrate |
| Comparative Example 13-16; Example 15, 17, 20, 21-24, 28-29 | crystalline LiCoPO₄ | 3.7g lithium carbonate; 15.5g cobalt sulfate; 11.5g ammonium dihydrogen phosphate; 12.6g oxalic acid dihydrate |
| Comparative Example 17 | amorphousLiCoPO₄ | 3.7g lithium carbonate; 15.5g cobalt sulfate; 11.5g ammonium dihydrogen phosphate; 12.6g oxalic acid dihydrate |
| Example 16 | crystalline LiNiPO₄ | 3.7g lithium carbonate; 11.9g nickel carbonate; 11.5g ammonium dihydrogen phosphate; 12.6g oxalic acid dihydrate |

**Table 5: Coating of the second cladding layer (Step S6)**

| No. | Material for the second cladding layer and the amount (based on the weight of the core) | Amount of pyrophosphate-coated material added in step S6 (g) | Step S6: Coating of the second cladding layer | | | | |
|---|---|---|---|---|---|---|---|
| | | | The amount of correspondi ng coating material in the second cladding layer suspension (g) | Mixing time (hour) | Drying temperat ure (°C) | Sintering temperat ure (°C) | Sint erin g tim e (ho ur) |
| Comparative Example 12 | 3% crystalline LiFePO₄ | 1571.1 | 47.1 | 6 | 120 | 700 | 8 |
| Comparative Example 13 | 4% crystalline LiCoPO₄ | 1599.9 | 62.7 | 6 | 120 | 750 | 8 |
| Comparative Example 14 | 4% crystalline LiCoPO₄ | 1594.0 | 62.5 | 6 | 120 | 750 | 8 |
| Comparative Example 15 | 4% crystalline LiCoPO₄ | 1602.0 | 62.8 | 6 | 120 | 750 | 8 |
| Comparative Example 16 | 4% crystalline LiCoPO₄ | 1602.5 | 62.8 | 6 | 120 | 750 | 8 |
| Comparative Example 17 | 4% amorphous LiCoPO₄ | 1602.5 | 62.8 | 6 | 120 | 650 | 8 |
| Comparative Example 18 | 3% crystalline LiFePO₄ | 1586.8 | 47.1 | 6 | 120 | 700 | 8 |
| Examples 1-4 | 3% crystalline LiFePO₄ | 1586.8 | 47.1 | 6 | 120 | 700 | 8 |
| Example 5 | 3% crystalline LiFePO₄ | 1602.5 | 47.1 | 6 | 120 | 700 | 8 |
| Example 6 | 3% crystalline LiFePO₄ | 1618.2 | 47.1 | 6 | 120 | 700 | 8 |
| Example 7 | 3%crystalline LiFePO₄ | 1649.6 | 47.1 | 6 | 120 | 700 | 8 |
| Example 8 | 1% crystalline LiFePO₄ | 1586.8 | 15.7 | 6 | 120 | 700 | 8 |
| Example 9 | 4% crystalline LiFePO₄ | 1586.8 | 62.8 | 6 | 120 | 700 | 8 |
| Example 10 | 5% crystalline LiFePO₄ | 1586.8 | 78.6 | 6 | 120 | 700 | 8 |
| Example 11 | 2.50% crystalline LiFePO₄ | 1587.8 | 39.3 | 6 | 120 | 700 | 8 |
| Example 12 | 3% crystalline LiFePO₄ | 1587.4 | 47.2 | 6 | 120 | 700 | 8 |
| Example 13 | 2% crystalline LiFePO₄ | 1602.8 | 31.4 | 6 | 120 | 700 | 8 |
| Example 14 | 3.50% crystalline LiFePO₄ | 1610.5 | 55.0 | 6 | 120 | 700 | 8 |
| Example 15 | 2.5% crystalline LiCoPO₄ | 1603.3 | 39.3 | 6 | 120 | 750 | 8 |
| Example 16 | 3% crystalline LiNiPO₄ | 1619.0 | 47.2 | 6 | 120 | 680 | 8 |
| Example 17 | 2.5% crystalline LiCoPO₄ | 1595.5 | 39.3 | 6 | 120 | 750 | 8 |
| Example 18 | 3% crystalline LiFePO₄ | 1585.9 | 47.1 | 6 | 120 | 700 | 8 |
| Example 19 | 4% crystalline LiFePO₄ | 1602.4 | 62.8 | 6 | 120 | 700 | 8 |
| Example 20 | 3% crystalline LiCoPO₄ | 1587.7 | 47.2 | 6 | 120 | 750 | 8 |
| Example 21 | 4% crystalline LiCoPO₄ | 1603.5 | 62.9 | 6 | 120 | 750 | 8 |
| Example 22 | 4% crystalline LiCoPO₄ | 1658.6 | 62.9 | 6 | 120 | 750 | 8 |
| Example 23 | 5.50% crystalline LiCoPO₄ | 1603.5 | 86.5 | 6 | 120 | 750 | 8 |
| Example 24 | 4% crystalline LiCoPO₄ | 1603.5 | 62.9 | 6 | 120 | 750 | 8 |
| Example 25 | 3% crystalline LiFePO₄ | 1588.7 | 47.2 | 6 | 120 | 700 | 8 |
| Example 26 | 3% crystalline LiFePO₄ | 1584.3 | 47.1 | 6 | 120 | 700 | 8 |
| Example 27 | 3% crystalline LiFePO₄ | 1584.9 | 47.1 | 6 | 120 | 700 | 8 |
| Example 28 | 4% crystalline LiCoPO₄ | 1605.4 | 630 | 6 | 120 | 750 | 8 |
| Example 29 | 4% crystalline LiCoPO₄ | 1605.4 | 630 | 6 | 120 | 750 | 8 |
| Note: Comparative Example 12 relates to the amount of the added core. | | | | | | | |

**Table 6: Coating of the third cladding layer (Step S8)**

| No. | Material for the third cladding layer | Molar ratio of SP2 to SP3 | Amount of material added in step S8 that has been covered with two layers (g) | Step S8: Coating of the third cladding layer | | | | |
|---|---|---|---|---|---|---|---|---|
| | | | | Amount of sucrose (g) | Mixin g time (hour) | Drying temperature (°C) | Sintering temperature (°C) | Sinterin g time (hour) |
| Comparative Example 1 | 1%carbon | 2.5 | 1568.5 | 37.3 | 6 | 150 | 650 | 8 |
| Comparative Example 2 | 2%carbon | 2.8 | 1572.2 | 74.7 | 6 | 150 | 680 | 8 |
| Comparative Example 3 | 2%carbon | 2.7 | 1601.8 | 74.6 | 6 | 150 | 680 | 7 |
| Comparative Example 4 | 1%carbon | 2.4 | 1571.0 | 37.3 | 6 | 150 | 630 | 8 |
| Comparative Example 5 | 1.5%carbon | 2.6 | 1570.6 | 56.0 | 6 | 150 | 650 | 7 |
| Comparative Example 6 | 2.5%carbon | 2.8 | 1573.6 | 93.4 | 6 | 150 | 680 | 8 |
| Comparative Example 7 | 1%carbon | 2.7 | 1572.2 | 37.3 | 6 | 150 | 680 | 7 |
| Comparative Example 8 | 1.5%carbon | 2.9 | 1571.1 | 56.0 | 6 | 150 | 680 | 10 |
| Comparative Example 9 | 1%carbon | 2.2 | 1572.2 | 37.3 | 6 | 150 | 600 | 8 |
| Comparative Example 10 | 1%carbon | 2.4 | 1571.1 | 37.3 | 6 | 150 | 630 | 8 |
| Comparative Example 11 | 1%carbon | 2.3 | 1586.8 | 37.3 | 6 | 150 | 620 | 8 |
| Comparative Example 12 | 1%carbon | 2.1 | 1618.2 | 37.3 | 6 | 150 | 600 | 6 |
| Comparative Example 13 | 1%carbon | 2 | 1662.6 | 37.3 | 6 | 120 | 600 | 6 |
| Comparative Example 14 | 1%carbon | 1.8 | 1656.5 | 37.1 | 6 | 120 | 600 | 6 |
| Comparative Example 15 | 1%carbon | 1.7 | 1664.8 | 37.3 | 6 | 100 | 600 | 6 |
| Comparative Example 16 | 1%carbon | 3.1 | 1665.4 | 37.3 | 6 | 150 | 700 | 10 |
| Comparative Example 17 | 1%carbon | 3.5 | 1665.4 | 37.3 | 6 | 150 | 750 | 10 |
| Comparative Example 18 | 1%carbon | 2.2 | 1633.9 | 37.3 | 6 | 150 | 700 | 10 |
| Example 1 | 1%carbon | 2.2 | 1633.9 | 37.3 | 6 | 150 | 700 | 10 |
| Example 2 | 3%carbon | 2.3 | 1633.9 | 111.9 | 6 | 150 | 600 | 9 |
| Example 3 | 4%carbon | 2.1 | 1633.9 | 149.2 | 6 | 150 | 600 | 6 |
| Example 4 | 5%carbon | 2.4 | 1633.9 | 186.5 | 6 | 150 | 630 | 8 |
| Example 5 | 1%carbon | 2.5 | 1649.6 | 37.3 | 6 | 150 | 650 | 8 |
| Example 6 | 1%carbon | 2.5 | 1665.3 | 37.3 | 6 | 150 | 650 | 8 |
| Example 7 | 1%carbon | 2.4 | 1696.7 | 37.3 | 6 | 150 | 630 | 8 |
| Example 8 | 1%carbon | 2.3 | 1602.5 | 37.3 | 6 | 150 | 600 | 9 |
| Example 9 | 1%carbon | 2.2 | 1649.6 | 37.3 | 6 | 150 | 600 | 8 |
| Example 10 | 1%carbon | 2.2 | 1665.3 | 37.3 | 6 | 150 | 600 | 9 |
| Example 11 | 1.5%carbon | 2.3 | 1629.0 | 56.1 | 6 | 150 | 600 | 9 |
| Example 12 | 2%carbon | 2.4 | 1634.6 | 74.7 | 6 | 150 | 630 | 8 |
| Example 13 | 2%carbon | 2.5 | 1634.2 | 74.6 | 6 | 150 | 650 | 8 |
| Example 14 | 2.5%carbon | 2.7 | 1665.5 | 93.3 | 6 | 150 | 680 | 7 |
| Example 15 | 2%carbon | 2.8 | 1642.6 | 74.7 | 6 | 150 | 680 | 8 |
| Example 16 | 1%carbon | 2.7 | 1666.2 | 37.3 | 6 | 150 | 680 | 7 |
| Example 17 | 1.5%carbon | 2.3 | 1634.8 | 56.0 | 6 | 150 | 600 | 9 |
| Example 18 | 1%carbon | 2.6 | 1633.0 | 37.3 | 6 | 150 | 650 | 7 |
| Example 19 | 1.5%carbon | 2.4 | 1665.2 | 56.0 | 6 | 150 | 630 | 8 |
| Example 20 | 1.5%carbon | 2.2 | 1634.8 | 56.0 | 6 | 150 | 600 | 9 |
| Example 21 | 1%carbon | 2.2 | 1666.4 | 37.3 | 6 | 150 | 600 | 9 |
| Example 22 | 1%carbon | 2.3 | 1721.4 | 37.3 | 6 | 150 | 600 | 9 |
| Example 23 | 1%carbon | 2.4 | 1690.0 | 37.3 | 6 | 150 | 630 | 8 |
| Example 24 | 5.5%carbon | 2.6 | 1666.4 | 205.4 | 6 | 150 | 650 | 7 |
| Example 25 | 1%carbon | 2.4 | 1635.9 | 37.4 | 6 | 150 | 630 | 8 |
| Example 26 | 1%carbon | 2.3 | 1631.3 | 37.3 | 6 | 150 | 600 | 9 |
| Example 27 | 1.5%carbon | 2.1 | 1631.9 | 55.9 | 6 | 150 | 600 | 6 |
| Example 28 | 1%carbon | 0.07 | 1668.3 | 37.4 | 6 | 80 | 600 | 6 |
| Example 29 | 1%carbon | 13 | 1668.3 | 37.4 | 6 | 150 | 850 | 10 |
| Note: Comparative Examples 1-2 and 4-10 relate to the amount of the added core, Comparative Examples 3 and 11 relate to the amount of the added material which has been covered by the first layer. | | | | | | | | |

**Table 7: Examination of the material for the first cladding layer**

| No. | Material for the first cladding layer | Preparation of the first cladding layer suspension |
|---|---|---|
| Example 30 | Li₂MgP₂O₇ | Dissolving 7.4g lithium carbonate, 8.4g magnesium carbonate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 31 | Li₂CoP₂O₇ | Dissolving 7.4g lithium carbonate, 15.5g cobalt sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 32 | Li₂CuP₂O₇ | Dissolving 7.4g lithium carbonate, 16.0g copper sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 33 | Li₂ZnP₂O₇ | Dissolving 7.4g lithium carbonate, 12.5g zinc carbonate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 34 | TiP₂O₇ | Dissolving 24.0g titanium sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 35 | Ag₄P₂O₇ | Dissolving 67.9g silver Nitrate, 23.0g ammonium dihydrogen phosphate and 25.2goxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 36 | ZrP₂O₇ | Dissolving 56.6g zirconium sulfate, 23.0g ammonium dihydrogen phosphate and 25.2g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |

**Table 8: Examination of the material for the second cladding layer**

| No. | Material for the second cladding layer | Preparation of the second cladding layer suspension |
|---|---|---|
| Example 37 | Cu₃(PO₄) ₂ | Dissolving 48.0g copper sulfate, 23.0g ammonium dihydrogen phosphate, 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 38 | Zn₃(PO₄)₂ | Dissolving 37.6g zinc carbonate, 23.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 39 | Ti₃ (PO₄) ₄ | Dissolving 72.0g titanium sulfate, 46.0gammonium dihydrogen phosphate and 75.6goxalic acid dihydrate in 1500mL of deionized water, then stirring and fully reacting for 6 hours to obtain a solution, after which the solution was heated to 120°C and maintained at this temperature for 6 hours to obtain a suspension |
| Example 40 | Ag₃PO₄ | Dissolving 50.9g silver Nitrate, 11.5gammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 41 | Zr₃(PO₄)₄ | Dissolving 85.0g zirconium sulfate, 46.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 42 | AlPO₄ | Dissolving 13.3g aluminum chloride, 11.5g ammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |

**Table 9: Examination of Organopolysiloxane compound**

| No. | Organopolysiloxane compound | | | |
|---|---|---|---|---|
| | Types | Content a of polar functional group | number average molecular weight | Content in positive electrode material composition |
| Comparative Example 1-18 | - | - | - | - |
| Example 1-42 | Aminoethyl aminopropyl polydimethylsiloxane | 12.0% | 3700 | 0.6wt% |
| Example 43 | Aminoethyl aminopropyl polydimethylsiloxane | 12.0% | 3700 | O.Olwt% |
| Example 44 | Aminoethyl aminopropyl polydimethylsiloxane | 12.0% | 3700 | O.lwt% |
| Example 45 | Aminoethyl aminopropyl polydimethylsiloxane | 12.0% | 3700 | 1wt% |
| Example 46 | Aminoethyl aminopropyl polydimethylsiloxane | 12.0% | 3700 | 2wt% |
| Example 47 | Aminoethyl aminopropyl polydimethylsiloxane | 12.0% | 3700 | 5wt% |
| Example 48 | Polydimethylsiloxane | 0% | 1200 | 0.6wt% |
| Example 49 | Polymethyl chloropropyl siloxane | 30.2% | 2500 | 0.6wt% |
| Example 50 | Polymethyl trifluoropropyl siloxane | 44.0% | 1400 | 0.6wt% |
| Example 51 | Mercaptopropyl polysiloxane | 15.0% | 2000 | 0.6wt% |
| Example 52 | Terminal hydroxyl polydimethylsiloxane | 3.4% | 1000 | 0.6wt% |
| Example 53 | Methoxy terminated polydimethylsiloxane | 3.1% | 2800 | 0.6wt% |
| Example 54 | Terminal polyether polydimethylsiloxane | 10.0% | 2110 | 0.6wt% |
| Example 55 | Pendant phosphate-grafted polydimethylsiloxane | 1.4% | 15600 | 0.6wt% |
| Example 56 | 1, 3, 5, 7-octamethyl cyclotetrasiloxane | 0% | 280 | 0.6wt% |
| Example 57 | Decamethylcyclopentasiloxane | 0% | 370 | 0.6wt% |
| Example 58 | Terminal polyether polydimethylsiloxane | 55.0% | 25312 | 0.6wt% |
| Example 59 | Polydimethylsiloxane | 0% | 400 | 0.6wt% |
| Example 60 | Polydimethylsiloxane | 0% | 10000 | 0.6wt% |
| Example 61 | Polydimethylsiloxane | 0% | 50000 | 0.6wt% |
| Example 62 | Polydimethylsiloxane | 0% | 80000 | 0.6wt% |
| Example 63 | Polydimethylsiloxane | 0% | 100000 | 0.6wt% |
| Example 64 | Polydimethylsiloxane | 0% | 300000 | 0.6wt% |
| Example 65 | Polydimethylsiloxane | 0% | 400000 | 0.6wt% |

### II. Performance evaluation

### 1. Measurement method for lattice change rate

Under a constant temperature environment of 25°C, a positive electrode active material sample was placed in an X-ray diffractometer (Bruker D8 Discover model) and tested at 1°/minute. The test data was organized and analyzed. Referring to the standard PDF card, the lattice constants a0, bO, c0, and v0 (a0, bO, and cO represent the length size in individual directions of lattice cell, respectively, v0 represents the volume of lattice cell, which can be directly obtained through XRD refinement results) were calculated.

Using the preparation method of button battery in the above Example, the positive electrode active material sample was prepared into a button battery. The button battery was charged at a small rate of 0.05C until the current decreased to 0.01C. Then the positive electrode plate was taken out the button battery and soaked in DMC for 8 hours. After drying and scraping the powder, the particles with a particle size less than 500 nm were screened out. A sample was taken and its lattice constant v1 was calculated in the same way as the fresh sample was tested above. (vO-vl) /v0 ×100% representing the lattice change rate of before and after complete de-intercalation and intercalation of lithium was shown in the table.

### 2. Measurement method for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Measurement method for surface oxygen valence

Sg of positive electrode active material sample was taken and prepared into a button battery according to the preparation method of button battery described in the above Example. The button battery was charged at a low rate of 0.05C until the current decreased to 0.01C. Then the positive electrode plate was taken out the button battery and soaked in DMC for 8 hours. After drying and scraping the powder, the particles with a particle size less than 500 nm were screened out. The obtained particles were measured with Electron Energy Loss Spectroscopy (EELS, Tales F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 4. Measurement method for compaction density

Sg of positive electrode active material sample powders were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²) . The compaction density was calculated via ρ= m/v.

### 5. Test of powder resistivity

An appropriate amount of positive electrode material composition sample powder used for preparing a full battery was taken and placed in a special mold of a powder resistivity tester. Pressure was set, and the powder resistivity at different pressures was obtained. In the present application, the pressure can be set to 12 Mpa. The testing instrument can be Suzhou lattice ST2722-SZ type four-probe powder resistivity tester.

### 6. Test of specific surface area

Sg of positive electrode material composition sample powder used for preparing a full battery was taken. The specific surface area was tested by Micromeritics Tri-Star 3020 specific surface area aperture analysis tester. A method for calculating the specific surface area is BET (BrunauerEmmett Teller) method.

### 7. Test of contact angle

A drop of ethylene carbonate (EC) was dropped on the surface of the positive electrode film layer at room temperature. The solid-liquid contact angle over a period of 60 seconds was measured by LSA 200 optical contact angle testing instrument of LAUDA Scientific Company in Germany.

### 8. Measurement method for initial gram capacity of button battery

At a constant temperature of 25°C, a button battery was charged to 4.3V at 0.1C, then charged at a constant voltage of 4.3V until the current was less than or equal to 0.05 mA, then rested for 5 minutes. Then the button battery was discharged at 0.1C to 2.0V. The discharge capacity measured at this moment was initial gram capacity, denoted as DO.

### 9. Measurement method for 3C charging constant current ratio

Under a constant temperature environment of 25°C, a fresh full battery rested for 5 minutes and was discharged at a rate of 1/3C to 2.5V, and rested for 5 minutes and was charged at 1/3C to 4.3V, and then charged at a constant voltage at 4.3V until the current was less than or equal to 0.05 mA. The full battery rested for 5 minutes, then the charging capacity at this moment was reported as C0. The full battery was discharged at 1/3C to 2.5V, rested for 5 minutes, then was charged at 3C to 4.3V, rested for 5 minutes. The charging capacity at this moment was reported as C1. The 3C charging constant current ratio was Cl/CO × 100%.

### The higher the 3C charging constant current ratio, the better the rate performance of the battery.

### 10. Test of gas expansion at 60°C of full battery

A full battery stored 100% state of charge (SOC) at 60°C. Before and during storage, the open circuit voltage (OCV) and AC internal impedance (IMP) of the battery were tested to monitor SOC and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity F₁ of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V, the volume of battery was calculated: V= ( F₁-F₂) / (ρ×g) .

From the OCV and IMP test results, it can be seen that the battery maintains a SOC of 99% or higher throughout the testing process until the end of storage.

After 30 days of storage, the volume of battery was measured, and the percentage increase in battery volume after storage compared to the previous battery volume was calculated.

### 11. Test of cycle performance at 45°C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as E0. The above charging-discharging cycle was repeated until the discharging capacity was reduced to 80% of E0. The number of cycles the battery had undergone at this moment was reported.

### 12. Measurement method for leaching out of Mn (and Fe doped at Mn site) after cycling

At 45°C, a full battery with capacity reduced to 80% was discharged to 2.0 V of cutoff voltage at a rate of 0.1 C. Then the battery was disassembled, the negative electrode plate was taken out. 30 discs of unit areas (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 13. Measurement of manganese and phosphorus in positive electrode active material

Sg of the positive electrode active material made above was dissolved in 100mL of inverse aqua regia (concentrated hydrochloric acid: concentrated nitric acid=1:3), the content of each element of the solution was tested by using ICP, and then the content of manganese or phosphorus element (amount of manganese or phosphorus element/amount of the positive electrode active material×100%) was measured and converted, to obtain the weight percentage thereof.

### 14. Measurement for the thickness of cladding layer

The thickness of the cladding layer was tested via FIB by cutting a thin slice with a thickness of about 100 nm from the center of a single particle of the positive electrode active material produced as described above, and then conducting TEM test on the thin slice to obtain the original picture of the TEM test.

The original pictures from the above TEM test were opened in DigitalMicrograph software, and the interplanar spacing and angle information were used to recognize the cladding layer and measure the thickness of the cladding layer.

### The thickness was measured at three locations for the selected particles and averaged.

### 15. Test for interplanar spacing and angle

Ig of each positive electrode active material powder made above was added into a 50mL test tube, and injected 10mL of alcohol with a mass fraction of 75% into the test tube, stirred and dispersed for 30 minutes, and then a clean disposable plastic pipette was used to take an appropriate amount of the above solution and it was added dropwise on a 300-mesh copper mesh, at this time, some of the powder was left on the mesh, and then the mesh was transferred to a TEM (Tales F200s G2) sample chamber with the sample for testing, and the original pictures of TEM test was obtained.

The original images from the above TEM test were opened in DigitalMicrograph software and Fourier transformed (automatically done by the software after clicking on the operation) to obtain the diffraction pattern, and the distance from the diffracted spot to the center of the diffraction pattern was measured to obtain the interplanar spacing, and the angle was calculated according to the Bragg equation.

By comparing the obtained interplanar spacing and the corresponding angle with their standard values, the different substances in the cladding layer can be recognized.

### 16. Determination of the molar ratio of SP2 and SP3 forms in the carbon of the third cladding layer

This test was performed by Raman spectroscopy. The molar ratio of the two forms was confirmed by splitting the peaks of the energy spectrum of the Raman test to obtain I_{d}/I_{g}, with I_{d} being the peak intensity of the SP3 carbon and Ig being the peak intensity of the SP2 carbon.

### 17. Determination of the chemical formula of the inner core and the composition of different cladding layers

The internal microstructure and surface structure of the positive electrode active material were characterized with high spatial resolution by the spherical Aberration Corrected Scanning Transmission Electron Microscope (ACSTEM) . By combining with the three-dimensional reconstruction technology, the chemical formula of the positive electrode active material were obtained.

Table 10 illustrates the performance data of the positive electrode active material, the positive electrode material composition, the positive electrode plate, the button battery or full battery in Examples 1-29 and Comparative Examples 1-18 measured in accordance with the above performance test methods.

Table 11 illustrates the thickness of each cladding layer and the weight ratio of elemental manganese and elemental phosphorus in the positive electrode active materials prepared in Examples 1-14 and Comparative Examples 3-4, 12.

Table 12 illustrates the interplanar spacing and angle of the first cladding layer material and the second cladding layer material in the positive electrode active materials prepared in Examples 1, 30-42.

Table 13 illustrates the performance data of the positive electrode active material, the positive electrode material composition, the positive electrode plate, the button battery or full battery in Examples 30-42 measured in accordance with the performance test methods described above.

Table 14 illustrates the performance data of the positive electrode material composition, the positive electrode plate, the button battery or full battery in Examples 43-65 measured in accordance with the performance test methods described above.

**Table 10**

| No. | Positive electrode active material | | | | Positive electrode material composition | | Positive electrode plate | Button battery or full battery | | | | |
|---|---|---|---|---|---|---|---|---|---|---|---|---|
| | Lattice change rate (%) | Li/Mn anti-site defect concentration (%) | Surface oxygen valence | Compaction density (g/cm³) | Powder resistivity (Ω/cm) | Specific surface area (m2/g) | Contact Angle (°) | Capacity of button battery at 0.1C mAh/g | 3C charging constant current ratio (%) | Expansion rate of battery after storage at 60°C for 30 days (%) | Number of cycles at capacity retention of 80% @45°C | Leaching out of Mn and Fe after cycling (ppm) |
| Comparative Example 1 | 11.4 | 5.2 | -1.55 | 1.5 | 29.158 | 17.5 | 0.3 | 125.6 | 50.1 | 48.6 | 185 | 2060 |
| Comparative Example 2 | 10.6 | 3.3 | -1.51 | 1.67 | 22.271 | 18.3 | 1.3 | 126.4 | 54.9 | 47.3 | 243 | 1810 |
| Comparative Example 3 | 10.8 | 3.4 | -1.64 | 1.64 | 22.351 | 18.2 | 1.5 | 144.7 | 52.1 | 41.9 | 378 | 1728 |
| Comparative Example 4 | 4.3 | 2.8 | -1.82 | 1.69 | 29.957 | 17.1 | 0.8 | 151.2 | 56.3 | 8.4 | 551 | 1096 |
| Comparative Example 5 | 2.8 | 2.5 | -1.85 | 1.65 | 26.753 | 18.4 | 0.4 | 148.4 | 58.2 | 7.5 | 668 | 31 |
| Comparative Example 6 | 3.4 | 2.4 | -1.86 | 1.61 | 19.911 | 18.8 | 0.6 | 149.6 | 58.4 | 8.6 | 673 | 64 |
| Comparative Example 7 | 4.5 | 2.4 | -1.83 | 1.73 | 28.992 | 17.5 | 1.1 | 148.6 | 59.2 | 83 | 669 | 85 |
| Comparative Example 8 | 2.3 | 2.4 | -1.89 | 1.68 | 27.081 | 18.5 | 1.5 | 152.3 | 59.3 | 7.3 | 653 | 30 |
| Comparative Example 9 | 2.3 | 2.4 | -1.89 | 1.75 | 29.003 | 17.4 | 2.1 | 152.3 | 59.8 | 7.3 | 672 | 30 |
| Comparative Example 10 | 2.3 | 2.2 | -1.9 | 1.81 | 28.792 | 17.2 | 0.4 | 154.2 | 64.1 | 7.2 | 685 | 28 |
| Comparative Example 11 | 2.3 | 2.2 | -1.92 | 1.92 | 29.034 | 17.5 | 0.7 | 154.3 | 65.4 | 5.4 | 985 | 12 |
| Comparative Example 12 | 2.3 | 2.1 | -1.95 | 1.95 | 29.117 | 17.5 | 0.5 | 154.6 | 65.5 | 4.2 | 795 | 18 |
| Comparative Example 13 | 11.4 | 5.2 | -1.96 | 1.63 | 29.318 | 17.2 | 1.1 | 130.2 | 52.4 | 5.4 | 562 | 56 |
| Comparative Example 14 | 8.1 | 3.8 | -1.96 | 1.76 | 28.994 | 17.6 | 2.5 | 135.1 | 58.3 | 5.1 | 631 | 41 |
| Comparative Example 15 | 2 | 1.8 | -1.96 | 2.13 | 28.129 | 17.4 | 2.1 | 154.3 | 61.3 | 3.7 | 1126 | 8 |
| Comparative Example 16 | 2 | 1.9 | -1.96 | 1.95 | 29.682 | 17.2 | 1.1 | 152.7 | 60.5 | 4.5 | 1019 | 18 |

| Comparative Example 17 | 2 | 1.9 | -1.89 | 1.9 | 29.681 | 17.5 | 1.8 | 152.4 | 60.4 | 51 | 897 | 24 |
|---|---|---|---|---|---|---|---|---|---|---|---|---|
| Comparative Example 18 | 2.5 | 1.8 | -1.93 | 2.35 | 28.857 | 17.9 | 0.9 | 157.2 | 70.3 | 42 | 1128 | 7 |
| Example 1 | 2.5 | 1.8 | -1.93 | 2.35 | 24.092 | 13.5 | 17.1 | 157.7 | 72.1 | 42 | 1628 | 6 |
| Example 2 | 2.5 | 1.8 | -1.94 | 2.24 | 15.033 | 13.2 | 17.1 | 156.2 | 70.6 | 3.7 | 1683 | 6 |
| Example 3 | 2.5 | 1.8 | -1.94 | 2.22 | 11.861 | 13.4 | 16.8 | 155.6 | 70.8 | 3.4 | 1804 | 5 |
| Example 4 | 2.5 | 1.8 | -1.95 | 2.21 | 7.841 | 13.8 | 17.4 | 153.5 | 70.8 | 2.9 | 1836 | 3 |
| Example 5 | 2.5 | 1.8 | -1.93 | 2.33 | 23.891 | 13.2 | 17.3 | 156.8 | 70.6 | 3.1 | 1931 | 5 |
| Example 6 | 2.5 | 1.8 | -1.93 | 2.31 | 24.001 | 13.4 | 17.5 | 156.2 | 69.4 | 2.8 | 2006 | 4 |
| Example 7 | 2.5 | 1.8 | -1.93 | 2.28 | 23.997 | 13.8 | 16.9 | 155.8 | 68.8 | 2.5 | 2077 | 3 |
| Example 8 | 2.5 | 1.8 | -1.93 | 2.29 | 24.118 | 13.2 | 17.5 | 156.5 | 69.6 | 3.4 | 1488 | 9 |
| Example 9 | 2.5 | 1.8 | -1.98 | 2.46 | 24.392 | 13.5 | 16.9 | 157.4 | 73.8 | 2.9 | 1716 | 6 |
| Example 10 | 2.5 | 1.8 | -1.98 | 2.49 | 24.336 | 14.1 | 17.8 | 157.7 | 75.4 | 2.5 | 1916 | 5 |
| Example 11 | 2.6 | 1.9 | -1.97 | 2.38 | 22.383 | 13.9 | 17.4 | 157.1 | 72.6 | 3.5 | 1456 | 6 |
| Example 12 | 2.4 | 1.8 | -1.97 | 2.41 | 18.333 | 13.4 | 17.7 | 156.1 | 74.5 | 2.5 | 1566 | 4 |
| Example 13 | 2.7 | 1.9 | -1.97 | 2.42 | 18.481 | 13.6 | 17.5 | 156.5 | 75.3 | 3.5 | 1637 | 5 |
| Example 14 | 2.8 | 1.9 | -1.97 | 2.45 | 16.869 | 14.3 | 17.4 | 153.6 | 76.5 | 3.7 | 1738 | 3 |
| Example 15 | 2.2 | 1.9 | -1.97 | 2.46 | 18.992 | 13.2 | 17.1 | 153.4 | 74.3 | 3.7 | 1539 | 3 |
| Example 16 | 2.1 | 1.9 | -1.98 | 2.47 | 23.997 | 13.9 | 18.3 | 154.1 | 73.8 | 3.8 | 1562 | 5 |
| Example 17 | 2.5 | 1.7 | -1.98 | 2.41 | 22.765 | 13.6 | 16.3 | 155.4 | 75.8 | 4.5 | 1688 | 4 |
| Example 18 | 2.3 | 1.6 | -1.97 | 2.42 | 24.298 | 13.7 | 17.8 | 154.6 | 76.1 | 47 | 1808 | 4 |
| Example 19 | 2.2 | 1.7 | -1.97 | 2.43 | 22.003 | 13.6 | 17.4 | 154.3 | 76.9 | 47 | 1758 | 4 |
| Example 20 | 2.6 | 1.8 | -1.94 | 2.42 | 22.198 | 13.4 | 17.7 | 153.9 | 75.8 | 3.3 | 1888 | 4 |
| Example 21 | 2.4 | 1.7 | -1.97 | 2.41 | 23.886 | 13.9 | 17.5 | 154.7 | 76.8 | 3.5 | 1757 | 4 |
| Example 22 | 2.4 | 1.8 | -1.95 | 2.32 | 24.187 | 14 | 17.8 | 152.2 | 72.7 | 2.7 | 1986 | 2 |
| Example 23 | 2.3 | 1.7 | -1.96 | 2.46 | 23.996 | 14.1 | 17.4 | 151.7 | 76.9 | 2.4 | 2075 | 3 |
| Example 24 | 2.2 | 1.8 | -1.95 | 2.47 | 6.589 | 13.7 | 17.9 | 152.1 | 76.6 | 2.5 | 1978 | 3 |
| Example 25 | 2.1 | 1.7 | -1.98 | 2.49 | 24.876 | 13.6 | 17.5 | 158.6 | 78.5 | 2.9 | 1968 | 3 |
| Example 26 | 3.6 | 2.5 | -1.97 | 2.21 | 24.587 | 14.3 | 17.4 | 152.3 | 56.8 | 4.8 | 1447 | 8 |
| Example 27 | 2.8 | 2.1 | -1.98 | 2.24 | 22.887 | 13.6 | 17.6 | 155.7 | 74.8 | 3.8 | 1556 | 6 |
| Example 28 | 2.5 | 1.9 | -1.94 | 1.95 | 24.167 | 13.4 | 17.4 | 154.4 | 54.7 | 6.4 | 1416 | 9 |
| Example 29 | 2.4 | 1.8 | -1.95 | 1.98 | 23.998 | 13.6 | 17.5 | 155.8 | 68.4 | 4.5 | 1477 | 7 |

**Table 11**

| No. | Thickness of the first cladding layer (nm) | Thickness of the second cladding layer (nm) | Thickness of the third cladding layer (nm) | Content of Mn (wt%) | Weight ratio of Mn to P |
|---|---|---|---|---|---|
| Comparative Example 3 | 4 | - | 10 | 26.1 | 1.383 |
| Comparative Example 4 | - | - | 5 | 24.3 | 1.241 |
| Comparative Example 12 | - | 7.5 | 5 | 19.6 | 1.034 |
| Example 1 | 2 | 7.5 | 5 | 19.0 | 1.023 |
| Example 2 | 2 | 7.5 | 15 | 18.3 | 1.023 |
| Example 3 | 2 | 7.5 | 20 | 18.0 | 1.023 |
| Example 4 | 2 | 7.5 | 25 | 17.9 | 1.023 |
| Example 5 | 4 | 7.5 | 5 | 18.7 | 1.011 |
| Example 6 | 6 | 7.5 | 5 | 18.3 | 0.999 |
| Example 7 | 10 | 7.5 | 5 | 17.6 | 0.975 |
| Example 8 | 2 | 2.5 | 5 | 19.8 | 1.043 |
| Example 9 | 2 | 10 | 5 | 18.7 | 1.014 |
| Example 10 | 2 | 12.5 | 5 | 18.4 | 1.004 |
| Example 11 | 2 | 6.3 | 7.5 | 19.0 | 1.026 |
| Example 13 | 4 | 5 | 10 | 18.7 | 1.108 |
| Example 14 | 5 | 8.8 | 12.5 | 17.8 | 1.166 |

**Table 12**

| No. | Interplanar spacing of the first cladding layer (nm) | Crystal orientation (111) angle of the first cladding layer (°) | Interplanar spacing of the second cladding layer (nm) | Crystal orientation (111) angle of the second cladding layer (°) |
|---|---|---|---|---|
| Example 1 | 0.303 | 29.496 | 0.348 | 25.562 |
| Example 30 | 0.451 | 19.668 | 0.348 | 25.562 |
| Example 31 | 0.297 | 30.846 | 0.348 | 25.562 |
| Example 32 | 0.457 | 19.456 | 0.348 | 25.562 |
| Example 33 | 0.437 | 20.257 | 0.348 | 25.562 |
| Example 34 | 0.462 | 19.211 | 0.348 | 25.562 |
| Example 35 | 0.450 | 19.735 | 0.348 | 25.562 |
| Example 36 | 0.372 | 23.893 | 0.348 | 25.562 |
| Example 37 | 0.303 | 29.496 | 0.374 | 23.789 |
| Example 38 | 0.303 | 29.496 | 0.360 | 24.710 |
| Example 39 | 0.303 | 29.496 | 0.350 | 25.428 |
| Example 40 | 0.303 | 29.496 | 0.425 | 20.885 |
| Example 41 | 0.303 | 29.496 | 0.356 | 24.993 |
| Example 42 | 0.303 | 29.496 | 0.244 | 36.808 |

**Table 13**

| No. | Positive electrode active material | | | | Positive electrode material composition | | Positive electrode plate | Button battery or full battery | | | | |
|---|---|---|---|---|---|---|---|---|---|---|---|---|
| | Lattice change rate (%) | Li/Mn anti-site defect concentration (%) | Surface oxygen valence | Compactio n density (g/cm³) | Powder resistivity (Ω/cm) | Specific surface area (m²/g) | Contact Angle (°) | Capacity of button battery at 0.1C mAh/g | 3C charging constant current ratio (%) | Expansion rate of battery at 60°C storage (%) | Number of cycles at capacity retention of 80% @45°C | Leachin g out of Mn and Fe after cycling (ppm) |
| Example 30 | 2.4 | 1.9 | -1.97 | 2.36 | 24.098 | 13.4 | 18 | 156.9 | 68.9 | 48 | 1436 | 5 |
| Example 31 | 2.5 | 1.7 | -1.96 | 2.36 | 24.119 | 13.7 | 17.5 | 155.6 | 70.6 | 4.6 | 1505 | 2 |
| Example 32 | 2.5 | 1.7 | -1.97 | 2.38 | 23.578 | 14 | 17.6 | 156 | 69.6 | 43 | 1472 | 4 |
| Example 33 | 2.6 | 1.8 | -1.98 | 2.39 | 23.876 | 14.1 | 17.4 | 156.2 | 69.4 | 53 | 1415 | 13 |
| Example 34 | 2.6 | 1.9 | -1.96 | 2.34 | 24.598 | 13.7 | 18.1 | 156.8 | 71.3 | 4.6 | 1422 | 6 |
| Example 35 | 2.4 | 1.7 | -1.94 | 2.36 | 24.158 | 13.7 | 17.5 | 157.4 | 71.1 | 5.1 | 1520 | 1 |
| Example 36 | 2.5 | 1.9 | -1.92 | 2.33 | 23.669 | 13.6 | 17.4 | 155.7 | 71.8 | 5.4 | 1442 | 4 |
| Example 37 | 2.5 | 1.7 | -1.92 | 2.34 | 24.176 | 14.1 | 17.5 | 156.6 | 68.9 | 4.9 | 1472 | 8 |
| Example 38 | 2.4 | 1.9 | -1.95 | 2.33 | 24.187 | 13.6 | 17.5 | 154.9 | 67.5 | 59 | 1372 | 17 |
| Example 39 | 2.2 | 1.8 | -1.94 | 2.36 | 23.775 | 13.5 | 17.4 | 156.3 | 69.8 | 57 | 1435 | 14 |
| Example 40 | 2.4 | 1.9 | -1.91 | 2.37 | 23.969 | 13.4 | 17.6 | 156.3 | 71.9 | 53 | 1409 | 21 |
| Example 41 | 2.6 | 1.9 | -1.94 | 2.38 | 24.005 | 14.1 | 17.2 | 155.3 | 71.2 | 51 | 1393 | 17 |
| Example 42 | 2.4 | 1.9 | -1.92 | 2.36 | 23.179 | 13.9 | 17.1 | 157.2 | 71.8 | 4.2 | 1572 | 5 |

**Table 14**

| No. | Positive electrode material composition | | Positive electrode plate | Positive electrode material composition | | | | |
|---|---|---|---|---|---|---|---|---|
| | Powder resistivity (Ω/cm) | Specific surface area (m²/g) | Powder resistivity (Ω/cm) | Capacity of button battery at O.lC mAh/g | 3C charging constant current ratio (%) | Expansion rate of battery at 60°C storage (%) | Number of cycles at capacity retention of 80% @45°C | Leaching out of Mn and Fe after cycling (ppm) |
| Example 43 | 27.923 | 17.1 | 7.7 | 157.2 | 70.4 | 4.3 | 1176 | 7 |
| Example 44 | 25.584 | 15.4 | 13.6 | 157.3 | 71.6 | 43 | 1459 | 6 |
| Example 45 | 27.025 | 12.3 | 21.9 | 157.2 | 70.5 | 4.2 | 1566 | 6 |
| Example 46 | 29.023 | 10.3 | 25.3 | 157 | 70 | 43 | 1498 | 4 |
| Example 47 | 58.379 | 9.5 | 37.2 | 155.2 | 68.3 | 42 | 1325 | 4 |
| Example 48 | 24.321 | 13.9 | 19.1 | 157.3 | 70.3 | 43 | 1608 | 6 |
| Example 49 | 24.646 | 13.3 | 18.9 | 157.2 | 70.5 | 4.1 | 1610 | 9 |
| Example 50 | 24.838 | 14.5 | 17.3 | 157.6 | 70.2 | 4.2 | 1616 | 4 |
| Example 51 | 25.05 | 13.9 | 18.4 | 157.3 | 70.3 | 43 | 1619 | 5 |
| Example 52 | 24.375 | 13.5 | 18.5 | 157.2 | 70.6 | 4.2 | 1622 | 8 |
| Example 53 | 24.34 | 13.6 | 18.1 | 157 | 70.3 | 43 | 1609 | 7 |
| Example 54 | 24.51 | 13.7 | 16.2 | 157.3 | 70.4 | 4.3 | 1611 | 7 |
| Example 55 | 25.13 | 14.2 | 17.6 | 157.2 | 70.4 | 4.3 | 1606 | 6 |
| Example 56 | 25.696 | 13.4 | 16.1 | 157.1 | 70.1 | 43 | 1586 | 9 |
| Example 57 | 25.379 | 13.4 | 16.2 | 157.3 | 70.2 | 4.2 | 1575 | 6 |
| Example 58 | 50.793 | 14.2 | 7.4 | 156.5 | 70.1 | 4.1 | 1428 | 6 |
| Example 59 | 24.031 | 14.1 | 15.6 | 157.4 | 70.1 | 4.2 | 1591 | 6 |
| Example 60 | 25.689 | 13.6 | 23.4 | 157.3 | 70.2 | 4.3 | 1618 | 5 |
| Example 61 | 26.474 | 13.0 | 23.9 | 157.3 | 70.1 | 43 | 1600 | 6 |
| Example 62 | 28.291 | 12.8 | 25.3 | 157.1 | 70.2 | 43 | 1589 | 7 |
| Example 63 | 28.997 | 12.6 | 26.1 | 157 | 70.3 | 43 | 1572 | 7 |
| Example 64 | 29.434 | 12.1 | 26.9 | 156.9 | 70.1 | 43 | 1563 | 5 |
| Example 65 | 46.975 | 11.9 | 40.2 | 155.8 | 68.7 | 4.2 | 1548 | 8 |

As can be seen from Table 10, the Examples achieve a smaller lattice change rate, a smaller Li/Mn anti-site defect concentration, a larger compaction density, a surface oxygen valence state closer to the -2 valence, a smaller amount of post-cycling leaching out of Mn and Fe, and a better battery performance, such as a better high-temperature storage performance and a better high-temperature cycling performance, as compared to the Comparative Examples. When the positive electrode active material of an example of the present application is combined with the organopolysiloxane compound, it can further alleviate the erosion of the electrolyte on the surface of the positive electrode active material and reduce the amount of post-cycling leaching out of Mn and Fe, and thus can further improve the cycling performance of the battery.

As can be seen from Table 11, by doping and covering the manganese and phosphorus sites of the lithium manganese iron phosphate (containing 35% manganese and about 20% phosphorus), the content of manganese in the positive electrode active material and the ratio of manganese to phosphorus by weight were significantly reduced; furthermore, comparing the Examples 1-14 with the corresponding Comparative Examples 3, 4, and 12, and combining with Table 10, it can be seen that the decrease of manganese and phosphorus in the positive electrode active material resulted in a decrease in the leaching out of manganese ions and iron ions as well as an improvement in the performance of the battery prepared therefrom.

As can be seen from Table 12, the interplanar spacing and angle of the first cladding layer and the second cladding layer in the positive electrode active material of the present application were within the range described in the present application. As can be seen from Table 13, the use of the first cladding layer and the second cladding layer comprising other elements within the scope of the present application similarly yielded positive electrode active materials with good performance and achieved good battery performance results.

As can be seen from Table 14, in the case of the same positive electrode active material, the selection of an organopolysiloxane compound satisfying one or more of a suitable polar functional group content, number average molecular weight, and adding amount to be used in combination with the positive electrode active material was able to further improve the cycling performance of the battery without affecting the energy density and kinetic performance.

It can also be seen from Examples 1 and 43-47 that the powder resistance of the positive electrode active material composition decreased first and then increased as the addition amount of the organopolysiloxane compound increased. The possible reason for this was that when the addition amount of the organopolysiloxane compound was within a certain range, it was able to reduce the interaction between the conductive agents and alleviate the agglomeration of the conductive agents due to its hydrophobicity, and a better conductive network can thus be formed.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A positive electrode material composition comprising a positive electrode active material with a core-shell structure and an organopolysiloxane compound,
wherein the positive electrode active material comprises a core and a shell covering the core,
the core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral;
the shell comprises a first cladding layer covering the core, a second cladding layer covering the first cladding layer and a third cladding layer covering the second cladding layer, the first cladding layer comprising crystalline pyrophosphates LiₐMP₂O₇ and/or M_{b} (P₂O₇) _{c}, 0 < a < 2, 1 < b < 4, 1 < c < 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LiₐMP₂O₇ and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon.

2. The positive electrode material composition according to claim 1, wherein the organopolysiloxane compound comprises at least one structural unit shown in Formula 1, 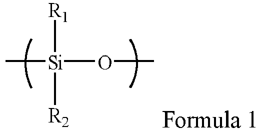
R₁ and R₂ each independently represent H or at least one of the group consisting of the following functional groups: -COOH, -OH, -SH, -CN, -SCN, amino groups, phosphate groups, carboxylate groups, amide groups, aldehyde groups, sulfonyl groups, polyether chain segments, C₁-C₂₀ aliphatic hydrocarbon groups, C₁-C₂₀ halogenated aliphatic hydrocarbon group, C₁-C₂₀ heteroaliphatic hydrocarbon groups, C₁-C₂₀ halogenated heteroaliphatic hydrocarbon groups, C₆-C₂₀ aromatic hydrocarbon groups, C₆-C₂₀ halogenated aromatic hydrocarbon groups, C₂-C₂₀ heteroaromatic hydrocarbon groups, and C₂-C₂₀ halogenated heteroaromatic hydrocarbon groups;
optionally, R₁ and R₂ each independently represent H or at least one of the group consisting of the following functional groups: -COOH, -OH, -SH, amino groups, phosphate groups, polyether chain segments, C₁-C₈ alkyl groups, C₁-C₈ haloalkyl groups, C₁-C₈ heteroalkyl groups, C₁-C₈ haloheteroalkyl groups, C₂-C₈ alkenyl groups, C₂-C₈ haloalkenyl groups, and phenyl;
more optionally, R₁ and R₂ each independently represent H or at least one of the group consisting of the following functional groups: -OH, -SH, amino groups, phosphate groups, polyether chain segments, Ci-Cs alkyl groups, Ci-Cs haloalkyl groups, C₁-C₈ heteroalkyl groups, C₁-C₈ haloheteroalkyl groups, C₂-C₈ alkenyl groups, and C₂-C₈ haloalkenyl groups.

3. The positive electrode material composition according to any one of claims 1 to 2, wherein the organopolysiloxane compound comprises one or more selected from of a linear polysiloxane, and a cyclic polysiloxane, optionally, the organopolysiloxane compound is selected from a linear polysiloxane.

4. The positive electrode material composition according to claim 3, wherein the linear polysiloxane further comprises a capping group,
optionally, the capping group comprises at least one of the group consisting of the following functional groups: polyethers, Ci-Cs alkyl groups, Ci-Cs haloalkyl groups, C₁-C₈ heteroalkyl groups, C₁-C₈ haloheteroalkyl groups, C₂-C₈ alkenyl groups, C₂-C₈ haloalkenyl groups, C₆-C₂₀ aromatic hydrocarbon groups, Ci-Cs alkoxy groups, C₂-C₈ epoxy groups, hydroxyl groups, C₁-C₈ hydroxyalkyl groups, amino groups, C₁-C₈ aminoalkyl groups, carboxyl groups, and C₁-C₈ carboxyl alkyl groups.

5. The positive electrode material composition according to any one of claims 3 to 4, wherein the linear polysiloxane comprises one or more of polydimethyl siloxane, polydiethyl siloxane, polymethyl ethyl siloxane, polymethyl vinyl siloxane, polyphenyl methyl siloxane, polymethyl hydrosiloxane, carboxyfunctionalized polysiloxane, polymethyl chloropropyl siloxane, polymethyl trifluoropropyl siloxane, perfluorooctyl methyl polysiloxane, mercaptopropyl polysiloxane, aminoethyl aminopropyl polydimethylsiloxane, methoxy terminated polydimethylsiloxane, hydroxypropyl terminated polydimethylsiloxane, aminopropyl terminated polydimethylsiloxane, terminal epoxy polysiloxane, terminal hydroxyl polydimethylsiloxane, terminal polyether polydimethylsiloxane, side chain aminopropyl polysiloxane, pendant hydroxymethyl polysiloxane, pendant hydroxypropyl polysiloxane, pendant polyether-grafted polydimethylsiloxane, and pendant phosphate-grafted polydimethylsiloxane; optionally, one or more of polydimethyl siloxane, polymethyl chloropropyl siloxane, polymethyl trifluoropropyl siloxane, mercaptopropyl polysiloxane, aminoethyl aminopropyl polydimethylsiloxane, terminal hydroxyl polydimethylsiloxane, terminal polyether polydimethylsiloxane, pendant phosphate-grafted polydimethylsiloxane; and/or,
the cyclic polysiloxane comprises one or more of cyclic polydimethylsiloxane, cyclic polymethyl vinyl siloxane, cyclic polymethyl hydrosiloxane, and cyclic polymethyl trifluoropropyl siloxane; optionally, one or more of 1, 3, 5, 7-octamethyl cyclotetrasiloxane, 1, 3, 5, 7-tetrahydro-1, 3, 5, 7-tetramethyl cyclotetrasiloxane, decamethylcyclopentasiloxane, 2, 4, 6, 8-tetramethyl cyclotetrasiloxane, 2, 4, 6, 8-tetramethyl-2, 4, 6, 8-tetravinyl cyclotetrasiloxane, hexadecamethylcyclooctasiloxane, and tetradecamethylcycloheptasiloxane.

6. The positive electrode material composition according to any one of claims 1 to 5, wherein the organopolysiloxane compound has a number average molecular weight of less than 300, 000, optionally of 400 to 80, 000.

7. The positive electrode material composition according to any one of claims 1 to 6, wherein a polar functional group is present in a mass percentage *α* in the organopolysiloxane compound, 0≤*α* < 50%, optionally, 5%≤*α*≤30%.

8. The positive electrode material composition according to any one of claims 1 to 7, wherein the organopolysiloxane compound is present in an amount of 0.01 wt% to 2 wt%, optionally 0.1 wt% to 2 wt%, based on the total weight of the positive electrode material composition.

9. The positive electrode material composition according to any one of claims 1 to 8, wherein
the first cladding layer has a coating amount of greater than 0 and less than or equal to 6 wt%, optionally greater than 0 and less than or equal to 5.5 wt%, more optionally greater than 0 and less than or equal to 2 wt%, based on the weight of the core; and/or
the second cladding layer has a coating amount of greater than 0 and less than or equal to 6 wt%, optionally greater than 0 and less than or equal to 5.5 wt%, and more optionally between 2 wt% and 4 wt%, based on the weight of the core; and/or
the third cladding layer has a coating amount of greater than 0 and less than or equal to 6 wt%, optionally greater than 0 and less than or equal to 5.5 wt%, more optionally greater than 0 and less than or equal to 2 wt%, based on the weight of the core.

10. The positive electrode material composition according to any one of claims 1 to 9, wherein
the first cladding layer has a thickness of 1 nm to 10 nm; and/or
the second cladding layer has a thickness of 2 nm to 15 nm; and/or
the third cladding layer has a thickness of 2 nm to 25 nm.

11. The positive electrode material composition according to any one of claims 1 to 10, wherein
the crystalline pyrophosphate in the first cladding layer has an interplanar spacing ranging from 0.293 nm to 0.470 nm, and a crystal orientation (111) angle ranging from 18.00° to 32.00°; and/or
the crystalline phosphate in the second cladding layer has an interplanar spacing ranging from 0.244 nm to 0.425 nm, and a crystal orientation (111) angle ranging from 20.00° to 37.00°.

12. The positive electrode material composition according to any one of claims 1 to 11, wherein
in the core the ratio of y to 1-y is from 1:10 to 1:1, optionally from 1:4 to 1:1; and/or
in the core the ratio of z to 1-z is from 1:9 to 1:999, optionally from 1:499 to 1:249.

13. The positive electrode material composition according to any one of claims 1 to 12, wherein the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0.

14. The positive electrode material composition according to any one of claims 1 to 13, wherein
manganese is present in a content of 10 wt% to 35 wt%, optionally in the range of 15 wt% to 30 wt%, and more optionally in the range of 17 wt% to 20 wt%, based on the weight of the positive electrode active material; and/or
phosphorus is present in a content of 12 wt% to 25 wt%, optionally in the range of 15 wt% to 20 wt%, based on the weight of the positive electrode active material; and/or
a weight ratio of manganese to phosphorus is in the range of 0.90 to 1.25, optionally in the range of 0.95 to 1.20, based on the weight of the positive electrode active material.

15. The positive electrode material composition according to any one of claims 1 to 14, wherein the positive electrode active material satisfies at least one of the following (1) to (4) :
(1) before and after complete intercalation/deintercalation of lithium the positive electrode active material has a lattice change rate of 4% or less, optionally 3.8% or less, more optionally from 2.0% to 3.8%;
(2) the positive electrode active material has a Li/Mn anti-site defect concentration of 4% or less, optionally 2.2% or less, more optionally from 1.5% to 2.2%;
(3) the positive electrode active material has a compaction density of 2.2 g/cm³ or more, optionally 2.2 g/cm³ or more and 2.8 g/cm³ or less, at 3T; and
(4) the positive electrode active material has a surface oxygen valence of -1.82 or less, optionally - 1.89 to -1.98.

16. The positive electrode material composition according to any one of claims 1 to 15, further comprising a conductive agent and a binder,
optionally, the binder is present in a content of 1.79 wt% to 10 wt%, based on the total weight of the positive electrode material composition; and
optionally, the conductive agent is present in a content of 0.2 wt% to 10 wt%, based on the total weight of the positive electrode material composition.

17. The positive electrode material composition according to any one of claims 1 to 16, wherein the positive electrode material composition has a powder resistivity of 4 Ω/cm to 55 Q/cm, optionally from 4 Ω/cm to 40 Ω/cm at 12MPa; and/or
the positive electrode material composition has a specific surface area of 8 m²/g to 20 m²/g, optionally 8 m²/g to 15 m²/g.

18. A method for preparing a positive electrode material composition, comprising the following steps:
step of providing a core material: the core has the chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral;
step of coating: providing LiₐMP₂O₇ and/or M_{b} (P₂O₇) _{c} and XPO₄ suspensions, respectively, adding the core material to the suspensions and mixing them, and obtaining the positive electrode active material by sintering, wherein the positive electrode active material has a core-shell structure comprising the core and a shell covering the core, wherein the shell comprises a first cladding layer covering the core, a second cladding layer covering the first cladding layer and a third cladding layer covering the second cladding layer, the first cladding layer comprising crystalline pyrophosphates LiₐMP₂O₇ and/or M_{b} (P₂O₇) _{c}, 0 < a < 2, 1 < b < 4, 1 < c < 6, wherein each M in the crystalline pyrophosphates LiₐMP₂O₇ and/or M_{b} (P₂O₇) _{c} is independently one or more elements selected from Fe, Ni, Mg, Co, Cu, Zn, Ti, Ag, Zr, Nb, and Al, and the values of a, b, and c satisfy the condition that the crystalline pyrophosphate LiₐMP₂O₇ and/or M_{b} (P₂O₇) _{c} is electrically neutral; wherein the second cladding layer comprises crystalline phosphoric acid XPO₄, X being one or more elements selected from Li, Fe, Ni, Mg, Co, Cu, Zn, Ti, Ag, Zr, Nb and Al; and wherein the third cladding layer is carbon;
step of mixing: mixing homogeneously the resulting positive electrode active material with a organopolysiloxane compound, an optional binder and an optional conductive agent to obtain the positive electrode material composition.

19. The method according to claim 18, wherein the step of providing a core material comprises:
Step (1), mixing a manganese source, a dopant of element A and an acid in a solvent and stirring to obtain manganese salt particles doped with element A;
Step (2) : mixing the manganese salt particles doped with element A with a lithium source, a phosphorus source and a dopant of element R in a solvent to obtain a slurry, and obtaining a core doped with element A and element R after sintering under the protection of an inert gas atmosphere, wherein the core doped with element A and element R is Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

20. The method according to claim 19, wherein the mixing in step (1) is carried out at a temperature in a range of 20°C to 120°C, optionally in a range of 40°C to 120°C; and/or
the stirring in step (1) is carried out by at a rate of 400 rpm to 800 rpm for Ih to 9 h, optionally from 3 h to 7h; and/or
the mixing in step (2) is carried out at a temperature of 20°C to 120°C, optionally 40°C to 120°C for 1 hour to 10 hours.

21. The method according to any one of claims 19 to 20, wherein
the dopant of element A is one or more of monomers, carbonates, sulfates, chlorates, nitrates, organic acids, oxides, hydroxides of one or more of the elements selected from Zn, Al, Na, K, Mg, Mo, W, Ti, V, Zr, Fe, Ni, Co, Ga, Sn, Sb, Nb and Ge; and/or
the dopant of element R is one or more of an inorganic acid, an organic acid, a sulfate, a chloride, a nitrate, an organic acid salt, an oxide, a hydroxide of one or more of the elements of one or more of the elements of B, Si, N and S.

22. The method according to any one of claims 18 to 21, wherein the coating step comprises:
a first coating step: dissolving a source of element M, a source of phosphorus and an acid, and optionally a source of lithium, in a solvent to obtain suspension of first cladding layer; mixing the core obtained in the step of providing a core material with the suspension of first cladding layer obtained in the first coating step sufficiently, drying, and sintering to obtain the first cladding layer-covered material;
a second coating step: dissolving a source of element X, a phosphorus source, and an acid in a solvent to obtain a suspension of second cladding layer; mixing the first cladding layer-covered material obtained in the first coating step with the suspension second cladding layer obtained in the second coating step sufficiently, drying, and sintering, to obtain a two cladding layers-covered material;
a third coating step: dissolving a carbon source in a solvent and fully dissolving it to obtain a solution of third cladding layer; then adding the two cladding layers-covered material obtained in the second coating step to the solution of third cladding layer, mixing well, drying and then sintering to obtain a three cladding layers-covered material, i.e., a positive electrode active material.

23. The method according to claim 22, wherein
in the first coating step the pH of a solution with a source of elemental M, a source of phosphorus, and an acid dissolved, and optionally a lithium source, is controlled to be from 3.5 to 6.5, and then stirred and reacted for from 1 h to 5 h, and then the solution is warmed to 50°C to 120°C and maintained at that temperature for from 2 h to 10 h; and/or
sintering in the first coating step is carried out at 650°C to 800°C for 2 h to 6 h; and/or
in the second coating step a source of element X, a source of phosphorus and an acid are dissolved in a solvent and then stirred and reacted for 1 h to 10 h, and then the resulting solution is warmed to 60°C to 150°C and maintained at that temperature for 2 h to 10 h; and/or
the sintering in the second coating is carried out at 500°C to 700°C for 6 h to 10 h; and/or
the sintering in the third coating step is carried out at 700°C to 800°C for 6 h to 10 h.

24. A positive electrode plate comprising a positive electrode current collector and a positive electrode film layer provided on at least one surface of the positive electrode current collector, wherein the positive electrode film layer comprises the positive electrode material composition according to any one of claims 1 to 17 or the positive electrode material composition prepared by the process according to any one of claims 18 to 23, and the positive electrode material composition is present in the positive electrode film layer in a content of 50 wt% or more, optionally in a content of 90 wt% to 100 wt%, based on total weight of the positive electrode film layer.

25. The positive electrode plate according to claim 24, wherein the positive electrode plate satisfies at least one of the following (1) to (4) :
(1) a solid-liquid contact angle between the positive electrode film layer and a non-aqueous organic solvent is between 3° and 90°, optionally between 3° and 60°, and more optionally between 10° and 30°; and/or,
(2) the positive electrode film layer has a porosity of 15% to 50%, and optionally 15% to 30%;
(3) the positive electrode film layer has a resistance of greater than 0 and less than or equal to 6 Ω;
(4) a bonding force between the positive electrode film layer and the positive electrode current collector is greater than or equal to 0.5 MPa;
(5) the positive electrode film layer has a surface density of 0.006 g/cm² to 0.065 g/cm²;
(6) the positive electrode film layer has an absorption rate to the electrolyte of 0.0125 µg/s to 100 µg/s, optionally 0.5 µg/s to 40 µg/s.

26. A secondary battery comprising the positive electrode material composition according to any one of claims 1 to 17, or the positive electrode material composition prepared by the method according to any one of claims 18 to 23, or the positive electrode plate according to any one of claims 24 to 25.

27. An electrical device comprising the secondary battery according to claim 26.
